# EUROPEAN PATENT APPLICATION

(11) **EP 4 831 894 A1**
(43) Date of publication of application: **28.10.2026**
(21) Application number: 26172959.4
(22) Date of filing: 17.04.2026
(51) Int. Cl.: G06Q 30/015, G06F 40/30, G10L 15/26

(54) **MULTIMODAL REAL-TIME SCHEMA TRANSLATION AND PROMPTING SYSTEMS AND METHODS**

(30) Priority: 25.04.2025 US 202519189426
(71) Applicant: Yembo, Inc., San Diego, CA 92121 (US)
(72) Inventor: RATTNER, Zachary David, San Diego, 92121 (US); KENNEBECK, Noel Marie Murphy, San Diego, 92121 (US); SUS, Margaryta, San Diego, 92121 (US)
(74) Representative: Vossius & Partner Patentanwälte Rechtsanwälte mbB

(57) **Abstract**

Systems and methods for enhancing remote consultations using a context-aware teleprompter interface are described. A schema translator that identifies objects from video or image inputs and a multimodal signal processor that analyzes audio streams to extract semantic and contextual meaning from conversations. A prompt generator produces dynamic, contextually relevant prompts based on identified objects, speech content, and supplemental data such as historical estimates and real-time pricing. Prompts are displayed on a service provider device in real-time, guiding user interaction during the consultation while adapting based on conversational progress. The described techniques facilitate natural, unobtrusive guidance to support efficient decision-making, such as completing service estimates or digital agreements, and enable analytics on prompt engagement. This empowers service providers to achieve consistent, high-performance outcomes in a single session, improving conversion rates and operational efficiency, among other advantages.

## Description

Providing home services can include making determinations of the scope of work for estimating costs or planning resources required. Oftentimes, this requires a person to physically visit the home and perform a visual assessment as it relates to the services to be provided.

Systems and methods for enhancing remote consultations using a context-aware teleprompter interface are described. A schema translator identifies objects from video or image inputs and a multimodal signal processor that analyzes audio streams to extract semantic and contextual meaning from conversations. A prompt generator produces dynamic, contextually relevant prompts based on identified objects, speech content, and supplemental data such as historical estimates and real-time pricing. Prompts are displayed on a service provider device in real-time, guiding user interaction during the consultation while adapting based on conversational progress. The described techniques facilitate natural, unobtrusive guidance to support efficient decision-making, such as completing service estimates or digital agreements, and enable analytics on prompt engagement. This empowers service providers to achieve consistent, high-performance outcomes in a single session, improving conversion rates and operational efficiency, among other advantages.

Systems, methods, and computer program products are disclosed that include receiving, at a schema translator in communication with a service provider device configured to be controlled by the service provider user, a video feed from a client device configured to be controlled by the client user. The schema translator is configured to identify, during the video feed, one or more objects in the video feed. The video feed is relayed to the service provider device to cause a substantially simultaneous display of the video feed at the service provider device. A multimodal signal processor operatively coupled to the schema translator is configured to analyze an audio stream from the videoconference in combination with the one or more objects to extract semantic and contextual meaning from speech content of the service provider user and the client user. A prompt generator operatively coupled to the multimodal signal processor is configured to generate contextually relevant prompts based on at least (i) identification of the one or more objects, (ii) the audio stream, and (iii) the semantic and contextual meaning. The prompt generator is configured to determine whether a particular prompt has been addressed during the videoconference, including whether a corresponding question was asked and/or whether a response was received. A display module is configured to cause display of the prompts on the service provider device during the videoconference.

Systems, methods, and computer program products are disclosed that include identifying, with the schema translator, one or more objects in one or more images and/or a video of a location associated with the client user. The multimodal signal processor operatively coupled to the schema translator is configured to analyze the audio stream from the remote consultation in combination with the one or more objects to extract semantic and contextual meaning from speech content of the service provider user and the client user. The prompt generator operatively coupled to the multimodal signal processor is configured to generate the contextually relevant prompts based on at least (i) identification of the one or more objects, (ii) the audio stream, and (iii) the semantic and contextual meaning. The prompt generator is also configured to determine whether a particular prompt has been addressed during the consultation, including whether a corresponding question was asked and/or whether a response was received. The display module is configured to cause display of the prompts on a service provider device during the consultation.

In some variations, the prompt generator is configured to dynamically prioritize or suppress the prompts based on conversational progress; monitor in real-time whether the prompts have been addressed through natural speech; and automatically dismiss or escalate the prompts based on conversational cues.

In some variations, the multimodal signal processor is configured to analyze only a most recent portion of the audio stream from the consultation to extract the semantic and contextual meaning from the speech content of the service provider user and the client user. The most recent portion of the audio stream may comprise up to a most recent 30, 45, 60, or 90 seconds of the audio stream from the consultation, for example.

In some variations, the multimodal signal processor is configured to obtain historical estimate data, real-time pricing data, and/or contextual metadata associated with the one or more objects, and the prompt generator is configured to generate the prompts based at least in part on the historical estimate data, the real-time pricing data, and/or the contextual metadata.

In some variations, the contextual metadata includes location-based pricing models, prior client user interactions, and/or known logistical constraints.

In some variations, the prompts are configured to guide the service provider user toward completing a transaction with the client user.

In some variations, the display module is configured to cause unobtrusive display of the prompts on the service provider device during the consultation in a field or window proximate to but separate from a field or window that displays a video feed, and/or as part of a heads-up overlay on the video feed shown to the service provider user.

In some variations, the schema translator comprises a machine learning model trained to identify the one or more objects, and attributes of the one or more objects including size, weight, fragility, disassembly requirement, whether an object is a specialized piece of equipment, whether related services associated with an object are required, and packing method. The prompt generator is configured to generate the prompts based at least in part on the attributes.

In some variations, the multimodal signal processor is configured to transcribe the audio stream using automatic speech recognition techniques. Extracting semantic and contextual meaning from the speech content of the service provider user and the client user comprises identifying entities and context in transcribed content.

In some variations, entities comprise tokens in the transcribed content associated with the one or more objects, and/or identifiable items or concepts that have meaning within the one or more images and/or video of the location associated with the client user and/or conversation between the service provider user and the client user.

In some variations, the context comprises tokens in the transcribed content associated with at least one of surrounding information, background, or situational factors present in the one or more images and/or video of the location associated with the client user and/or conversation between the service provider user and the client user that influence determining the prompts.

In some variations, the prompt generator is configured to automatically record whether the service provider user follows a given prompt, and to provide post-consultation analytics indicating prompt success rate.

In some variations, the display module is configured to cause dynamic modification of a real-time interface display based on synchronization of the one or more objects identified in the one or more images and/or video of the location associated with the client user and recognized speech, thereby improving timing precision and reducing latency in prompted service provider user and client user interaction during the remote consultation.

In some variations, the display module is configured to render contextually-prioritized prompts as a graphical overlay in a predefined region of a live service provider device display of a video feed comprising the one or more images and/or video of the location associated with the client user.

In some variations, the schema translator is configured to facilitate completion of a service estimate and digital agreement during the consultation, without user interaction with a separate interface.

In some variations, the multimodal signal processor is configured to extract the semantic and contextual meaning from the speech content of the service provider user and the client user using a trained natural language model.

In some variations, the schema translator is configured to process the one or more images and/or video of the location associated with the client user received from the client device and identify, using a trained neural network, the one or more objects and spatial relationships corresponding to items within a physical environment.

In some variations, the multimodal signal processor comprises an encoder-decoder transformer configured to transcribe speech; and a large language model with JSON output configured to query the transcribed speech.

In some variations, the prompt generator comprises a neural network, a collection of neural networks, a large language model, and/or an encoder-decoder transformer.

In some variations, the prompt generator is configured to facilitate snoozing prompts until later in the consultation such that a snoozed prompt disappears from the display, but retains context on the object or scenario that caused the snoozed prompt such that the service provider user can view and address the snoozed prompt at a later time.

In some variations, the consultation comprises a videoconference.

Implementations of the current subject matter can include, but are not limited to, methods consistent with the descriptions provided herein as well as articles that comprise a tangibly embodied machine-readable medium operable to cause one or more machines (e.g., computers, etc.) to result in operations implementing one or more of the described features. Similarly, computer systems are also contemplated that may include one or more processors and one or more memories coupled to the one or more processors. A memory, which can include a computer-readable storage medium, may include, encode, store, or the like, one or more programs that cause one or more processors to perform one or more of the operations described herein. Computer implemented methods consistent with one or more implementations of the current subject matter can be implemented by one or more data processors residing in a single computing system or across multiple computing systems. Such multiple computing systems can be connected and can exchange data and/or commands or other instructions or the like via one or more connections, including but not limited to a connection over a network (e.g., the internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims. While certain features of the currently disclosed subject matter are described for illustrative purposes in relation to particular implementations, it should be readily understood that such features are not intended to be limiting. The claims that follow this disclosure are intended to define the scope of the protected subject matter.

### BRIEF DESCRIPTION OF THE DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1A is a logical-architecture block diagram that illustrates a system including a computing engine and other components as described herein configured to facilitate dynamic interactive operations in real-time during a remote consultation between a service provider user and a client user.
FIG. 1B is a diagram illustrating an exemplary system routing a video feed through a server in accordance with certain aspects of the present disclosure,
FIG. 1C is a diagram illustrating an exemplary system implementing peer-to-peer transmission of a video feed in accordance with certain aspects of the present disclosure,
FIG. 2A is a diagram illustrating a simplified machine learning model utilized for item identification and attribute determination in accordance with certain aspects of the present disclosure,
FIG. 2B is a diagram illustrating attribute determination of identified objects in accordance with certain aspects of the present disclosure,
FIG. 3 is a diagram illustrating an exemplary display of snapshots from the video feed as displayed at a service provider device in accordance with certain aspects of the present disclosure,
FIG. 4 is a diagram illustrating an exemplary display at a service provider device depicting updating of attributes in items identified in the snapshots in accordance with certain aspects of the present disclosure,
FIG. 5A is a diagram illustrating an exemplary display at a client device depicting attributes in items identified in a first snapshot in accordance with certain aspects of the present disclosure,
FIG. 5B is a diagram illustrating an exemplary display at a client device depicting attributes in items identified in a second snapshot in accordance with certain aspects of the present disclosure,
FIG. 5C is a diagram illustrating an exemplary display at a client device depicting attributes in items identified in a third snapshot in accordance with certain aspects of the present disclosure,
FIG. 6 illustrates views of a graphical user interface showing prompts during a video conference between a service provider user and a client user in accordance with certain aspects of the present disclosure,
FIG. 7A illustrates another exemplary service provider display generated at a graphical user interface of a service provider device, which has a prompt field, in accordance with certain aspects of the present disclosure;
FIG. 7B illustrates the second in a progression of prompts displayed in the prompt field from FIG. 7A, in accordance with certain aspects of the present disclosure;
FIG. 7C illustrates the third in a progression of prompts displayed in the prompt field from FIG. 7A and FIG. 7B, in accordance with certain aspects of the present disclosure;
FIG. 8 illustrates an update to the service provider display shown in FIG. 7A-7C, in accordance with certain aspects of the present disclosure;
FIG. 9 illustrates another exemplary service provider display, this time with no real-time video display;
FIG. 10 is a diagram illustrating an exemplary method in accordance with certain aspects of the present disclosure, and
FIG. 11 is a diagram that illustrates an exemplary computing system in accordance with implementations of the present system.

### DETAILED DESCRIPTION

The present disclosure relates to systems and methods for enhancing remote consultations between service provider users and client users through real-time, intelligent prompting. In contrast to prior systems that focused primarily on object recognition and schema translation for inventory purposes, the systems described herein leverage multimodal data-including audio, visual, contextual, and historical sources-to generate and manage dynamic prompts that are responsive to the live flow of conversation and user interaction. These prompts assist the service provider in conducting the session with improved situational awareness and transactional efficiency, all while maintaining an unobtrusive, speech-driven interface.

In one implementation, the system integrates a multimodal signal processor with a schema translator to correlate recognized objects (and attributes of those objects) with contextual meaning derived from real-time speech analysis. A prompt generator uses this information, together with metadata such as pricing models or past customer interactions, to deliver contextually prioritized prompts. These prompts are not statically presented, but instead are intelligently managed-entering, exiting, or nudging the user based on conversational flow, recognized follow-up actions, or deferred responses. This capability supports a fluid, natural interaction model that enables a service provider to remain fully engaged with the client, while being guided toward outcomes such as quote completion or agreement execution.

Furthermore, the disclosed systems and methods may be configured to operate in live consultation environments with minimal user interaction, enabling features such as automatic dismissal of addressed prompts, snoozing for later attention, and real-time analytics tracking. An interface may overlay suggestions onto a video display or present them in adjacent unobtrusive windows, depending on user configuration. This architecture supports a more sophisticated level of interaction than prior systems by allowing the prompts to adapt dynamically to speech content, object presence, and contextual metadata, thus empowering users to consistently perform at a high level during live client engagements.

These and other benefits are described in greater detail below, after introducing the components of the system and describing their operation. It should be noted, however, that not all implementations necessarily provide all of the benefits outlined herein, and some implementations may provide all or a subset of these benefits or different benefits, as various engineering and cost tradeoffs are envisioned, which is not to imply that other descriptions are limiting.

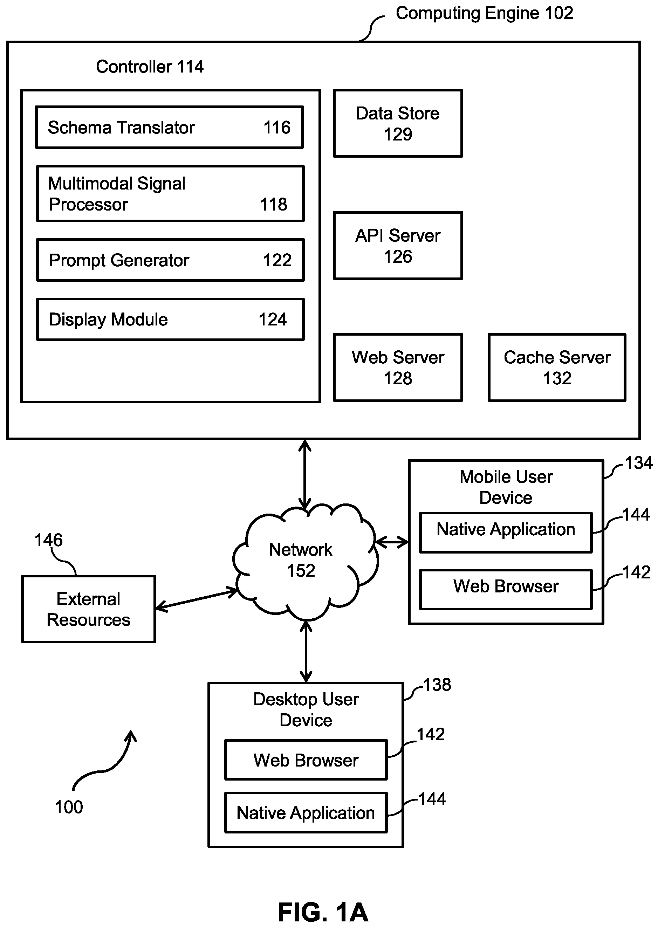

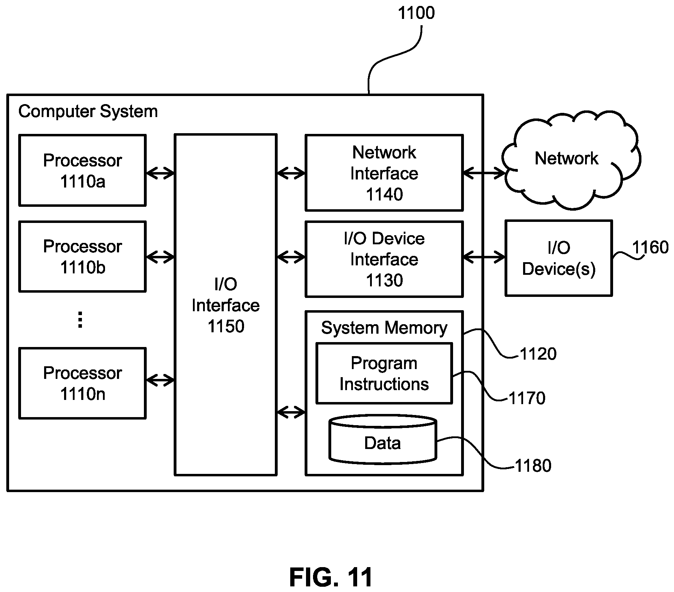

FIG. 1A illustrates a system 100 comprising a computing engine 102 and other components as described herein configured to facilitate dynamic interactive operations in real-time during a remote consultation between a service provider user and a client user. In some implementations, computing engine 102 is executed by one or more of the computers described below with reference to FIG. 11 and includes an application program interface (API) server 126, a web server 128, a data store 129, a cache server 132, and/or other components. These components, in some implementations, communicate with one another in order to provide the functionality of computing engine 102 described herein.

In some implementations, data store 129 may store data about client users, current and/or prior consultations, images and/or video of a location associated with a client user, audio data, historical estimate data, real-time pricing data, contextual metadata, and/or other information. Cache server 132 may expedite access to this data by storing likely relevant data in relatively high-speed memory, for example, in random-access memory or a solid-state drive. Web server 128 may serve webpages having graphical user interfaces that display one or more views that facilitate remote consultations, or other displays. The API server 126 may serve data to various applications that process data related to a remote consultations, and/or other data. The operation of these components may be coordinated by a controller 114, which may bidirectionally communicate with each of these components or direct the components to communicate with one another. Communication may occur by transmitting data between separate computing devices (e.g., via transmission control protocol/internet protocol (TCP/IP) communication over a network), by transmitting data between separate applications or processes on one computing device; or by passing values to and from functions, modules, or objects within an application or process, e.g., by reference or by value.

To illustrate an example of the environment in which computing engine 102 operates, the illustrated implementation of FIG. 1A includes a number of components with which computing engine 102 communicates: mobile user device(s) 134; desk-top user device(s) 138; and external resources 146. Each of these devices communicates with computing engine 102 via a network 152, such as the Internet or the Internet in combination with various other networks, like local area networks, cellular networks, or personal area networks.

Mobile user device(s) 134 may be smart phones, tablets, or other hand-held networked computing devices having a display, a user input device (e.g., buttons, keys, voice recognition, or a single or multi-touch touchscreen), memory (such as a tangible, machine-readable, non-transitory memory), a network interface, a portable energy source (e.g., a battery), a camera, a processor (a term which, as used herein, includes one or more processors) coupled to each of these components, and/or other components. The memory of the mobile user device(s) 134 may store instructions that when executed by the associated processor provide an operating system and various applications, including a web browser 142 and/or a native mobile application 144. The desk-top user device(s) 138 may also include a web browser 142 and/or native applications 144. In addition, the desktop user device(s) 138 may include a monitor; a keyboard; a mouse; memory; a processor; and a tangible, non-transitory, machine-readable memory storing instructions that when executed by the processor provide an operating system, native applications, and the web browser. The native applications 144 and/or the web browsers 142, in some implementations, are operative to provide a graphical user interface that communicates with computing engine 102 and facilitates user interaction with data from computing engine 102. The web browsers 142 may be configured to receive a website from computing engine 102 having data related to instructions (for example, instructions expressed in JavaScriptTM) that when executed by the browser (which is executed by the processor) cause a mobile user device 134 and/or a desktop user device 138 to communicate with computing engine 102 and facilitate user interaction with data from computing engine 102. The native application(s) 144 and the web browser(s) 142, upon rendering a webpage and/or a graphical user interface from computing engine 102, may generally be referred to as client applications of computing engine 102, which in some implementations may be referred to as a server. Implementations, however, are not limited to client/server architectures, and computing engine 102, as illustrated, may include a variety of components other than those functioning primarily as a server. Two user devices are shown (e.g., one mobile user device and one desktop user device), but implementations are expected to interface with substantially more, with more than 100 concurrent sessions and serving more than 1 million users distributed over a relatively large geographic area, such as a state or the entire United States.

External resources 146, in some implementations, include sources of information such as databases, websites, etc.; external entities participating with system 100 (e.g., systems or networks associated with a service provider), one or more servers outside of system 100, a network (e.g., the internet), electronic storage, equipment related to Wi-Fi ^{™} technology, equipment related to Bluetooth^{®} technology, data entry devices, or other resources. In some implementations, some or all of the functionality attributed herein to external resources 146 may be provided by resources included in system 100. External resources 146 may be configured to communicate with computing engine 102, mobile user devices 134, desktop user devices 138, and/or other components of system 100 via wired and/or wireless connections, via a network (e.g., a local area network and/or the internet), via cellular technology, via Wi-Fi technology, and/or via other resources.

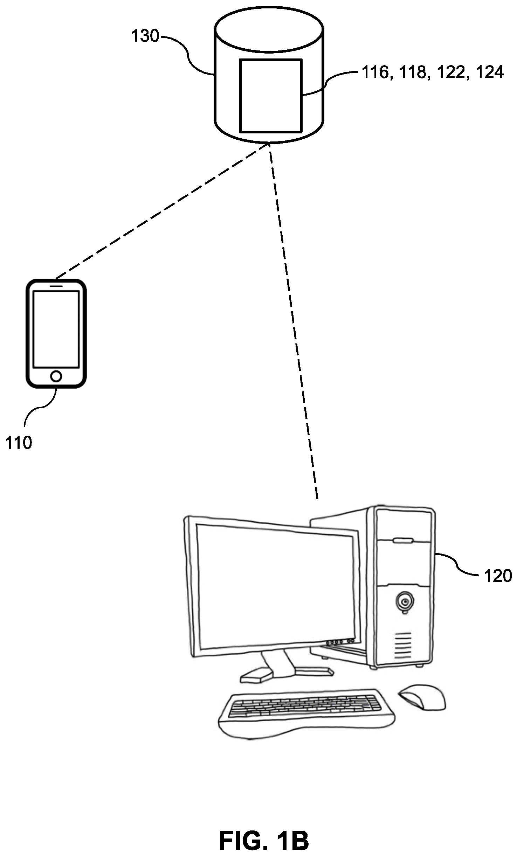

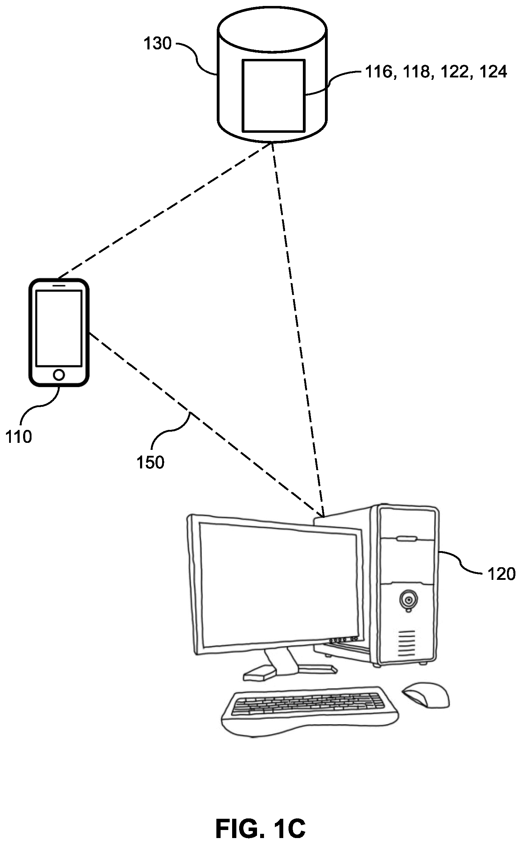

Thus, computing engine 102, in some implementations, operates in the illustrated environment by communicating with a number of different devices and transmitting instructions to various devices to communicate with one another. The number of illustrated external resources 146, desktop user devices 138, and mobile user devices 134 is selected for explanatory purposes only, and implementations are not limited to the specific number of any such devices illustrated by FIG 1, which is not to imply that other descriptions are limiting.

The controller 114 is configured to coordinate the operation of the other components of computing engine 102 to provide the functionality described herein. Controlled components may include one or more of a schema translator 116, a multimodal signal processor 118, a prompt generator 122, a display module 124, and/or other components. The controller 114 may be configured to direct the operation of the components by software; hardware; firmware; some combination of software, hardware, or firmware; or other mechanisms for configuring processing capabilities. In some implementations, schema translator 116, multimodal signal processor 118, prompt generator 122, and/or display module 124 are computer program instructions that are executable by controller 114 to implement one or more of the present techniques.

It should be appreciated that although schema translator 116, multimodal signal processor 118, prompt generator 122, and display module 124 are illustrated in FIG. 1A as being co-located, one or more of these components may be located remotely from the other components. The description of the functionality provided by the different components described below is for illustrative purposes, and is not intended to be limiting, as any of the components may provide more or less functionality than is described, which is not to imply that other descriptions are limiting. For example, one or more of the components may be eliminated, and some or all of its functionality may be provided by others of the components, again which is not to imply that other descriptions are limiting. As another example, controller 114 may be configured to control one or more additional components that may perform some or all of the functionality attributed below to schema translator 116, multimodal signal processor 118, prompt generator 122, and/or display module 124. In some implementations, computing engine 102 (e.g., controller 114 in addition to cache server 132, web server 128, and/or API server 126) is executed in a single computing device, or in a plurality of computing devices in a datacenter, e.g., in a service oriented or micro-services architecture.

It should be noted that in some implementations, computing engine 102 may be configured such that in the operations of controller 114, input from users may be processed by controller 114 through a variety of formats, including clicks, touches, and audio input. Also, the illustrated components of computing engine 102 are depicted as discrete functional blocks, but implementations are not limited to systems in which the functionality described herein is organized as illustrated by FIG. 1A. The functionality provided by each of the components of computing engine 102 may be provided by software or hardware modules that are differently organized than is presently depicted, for example such software or hardware may be intermingled, broken up, distributed (e.g. within a data center or geographically), or otherwise differently organized. The functionality described herein may be provided by one or more processors of one or more computers executing code stored on a tangible, non-transitory, machine readable medium.

Schema translator 116 (which may be in communication with a service provider device such as a desktop user device 138 configured to be controlled by a service provider user) is configured to receive a video feed from a client device (such as a mobile user device 134 configured to be controlled by a client user). As described herein, the video feed may be received in real-time or near-real time, or a different time (e.g., a pre-recorded video). Schema translator 116 is configured to identify (e.g., during the video feed if in real-time) one or more objects in the video feed, as described below. Note that in some implementations, no video feed is required at all (e.g., in the case of a simple phone call between users) to perform the prompting techniques described herein.

With respect to schema translator 116, the manual entry of information relating to a task (e.g., entering data into a computer system) can be tedious and imprecise. The disclosed systems and methods automate the generation and entry of information relevant to a task without requiring user input. The automation enabled by the present disclosure utilizes machine vision and object detection from video or single images. With a trained machine learning model, attributes of the detected objects can be automatically determined and populated as data into a schema that relates to the task. As used herein, the term "schema" refers to information needed to define or execute a task.

In one practical application, such as relocation, a schema can include a list of items to be moved and various attributes of those items such as size, volume, weight, fragility, disassembly requirements, whether an object is a specialized piece of equipment, whether related services associated with an object are required, packing method, etc. This may also include spatial relationships corresponding to objects and/or other items within a physical environment. Because different users (e.g., the client (client user) and professionals moving them (service provider user)) may need different information to complete the task, the schema for each may be different. In the relocation example, the professional performing the move may need detailed information about the volume and weight of various items. In contrast, the client being moved may not need (or have) this information and instead their schema may merely be a listing of items to be moved. To accelerate the population of electronic records (e.g., a list), a trained machine learning model can determine various attributes (e.g., volume, weight, etc.) of items identified via the aforementioned machine vision, spatial relationships, and/or other information. This can occur in real-time, such as during a remote consultation videoconference, with the system automatically entering the detected items and their attributes to the moving professional's schema. To facilitate efficient communication between the moving professional and the client, a simplified schema may be displayed to the client. While one exemplary application of the present disclosure is relocation, the underlying technology can be applied in other applications.

FIG. 1B is a diagram illustrating an exemplary system routing a video feed through a server 130 (e.g., computing engine 102). Some implementations discussed herein can incorporate the use of real-time video (also referred to as videoconferencing, video chat, or a video feed) between a client device 110 (e.g., similar to and/or the same as a mobile user device 134 shown in FIG. 1A) and a service provider device 120 (e.g., similar to and/or the same as a desktop user device 138 shown in FIG. 1A). Additionally or alternatively, the mode of communication can be the transmission of individual image frames or pictures from the client device and/or service provider device.

As used herein, a client device can be, e.g., smartphone, tablet, etc. or any device that has a video-taking and transmission capability (e.g., a mobile user device 134 shown in FIG. 1A). A client device can also include devices that only take still images such as digital cameras, a single image acquisition via a smartphone camera, etc. While in general the client device is typically mobile such that it can be used by a client to acquire video or still images in multiple locations, any device that has such capabilities can be considered the client device (e.g., even if such a device is a desktop user device 138 shown in FIG. 1A).

As used herein, a service provider device can be, for example, a smartphone, tablet, personal computer, desktop computer, etc. (e.g., a service provider device can also be a mobile user device 134 or a desktop user device 138 from FIG. 1A) Accordingly, the service provider device may be a workstation or other possibly less mobile computing system utilized by a person at a place of business when communicating with the client.

As used herein, the term "video feed" contemplates video acquired with a camera or other similar device and sent to another device. However, the term as used herein also includes the acquisition and transmission of still images which may be frames in the video feed or may be individual pictures taken (e.g., a photo mode of a smart phone or digital camera). It is also understood that a video feed may include sound data as part of the video stream. In other implementations, video and audio stream may be bifurcated such that the video feed goes to a device (e.g., a server or the service provider device) while audio is carried separately over conventional telecommunication modes. Accordingly, as used herein, the term "video feed" can include video, still images, and audio, in any combination.

Also shown in FIG. 1B is server 130 (e.g., computing engine 102 from FIG. 1A) where the computer program components (schema translator 116, multimodal signal processor 118, prompt generator 122, and/or display module 124) utilizing the images (as described in further detail herein) may be running. In implementations where some or all of the video feed (or images derived therefrom) are generated by the client device, such can be relayed or transmitted to the service provider device for concurrent display. While it is contemplated that such concurrent video display is substantially simultaneous, in some implementations there may be either intentional (or unintentional) delay or lag in the system such that image generation of the client device and the resultant display at the service provider device are not substantially simultaneous. As such, some implementations can include communication modes where the video or images are acquired at the client device and either have a significant delay or are even transmitted after cessation of image/video acquisition. While such implementations may lack the benefit of two-way real-time video communication between the client user (the person controlling the client device) and service provider user (the person controlling the service provider device), many implementations consistent with present disclosure can still be utilized.

The schema translator 116 can serve as the backend operator for a schema displayed at the client device and same (or different) schema displayed at the service provider device. The schema translator can have the outward-facing schemas be browser-based. For example, a client user can use a browser at the client device and go to the appropriate website in communication with the schema translator and a corresponding schema can be displayed at the client device. Similarly, the service provider user can use a browser at the service provider device and go to a website (or an internal dedicated program) also in communication with the schema translator such that a schema for the service provider device can be displayed.

In some implementations, the client and/or service provider users can use native applications at their respective devices rather than browser-based applications (e.g., as described with respect to FIG. 1A). For example, the service provider user could be in a native Windows application, and the client user is on a web browser. As another alternative, the client user could be in an iOS app, and the service provider user is on a web browser. As another alternative, both can be on native applications or in web browsers.

As used herein, when reference is made to a "schema" that is realized in a graphical display, this means that the information in the schema (e.g. lists, attributes of objects in such lists, spatial relationships, etc.) is generated for display in an appropriate graphical user interface. The particulars of the display can vary and all such designs and additional functionality that may be present are considered within the scope of the present disclosure.

FIG. 1C is a diagram illustrating an exemplary system implementing peer-to-peer transmission of a video feed. A peer-to-peer (P2P) connection 150 can be established between the client device and the service provider device for direct transmission of the video feed (i.e., not requiring that it be transmitted via server 130). Protocols that may be used include STUN, TURN, and ICE, among others. In this way, the video feed may be similar to, or utilize, video chat capabilities of other applications. The video feed can be concurrently transmitted to the server (e.g., computing engine 102 shown in FIG. 1A) for processing as described herein. Instructions from schema translator 116, multimodal signal processor 118, prompt generator 122, and/or display module 124 based on the processed video feed can then be separately transmitted to the client device and the service provider device for display. In most other respects, this implementation is similar to that described above with regard to FIG. 1B.

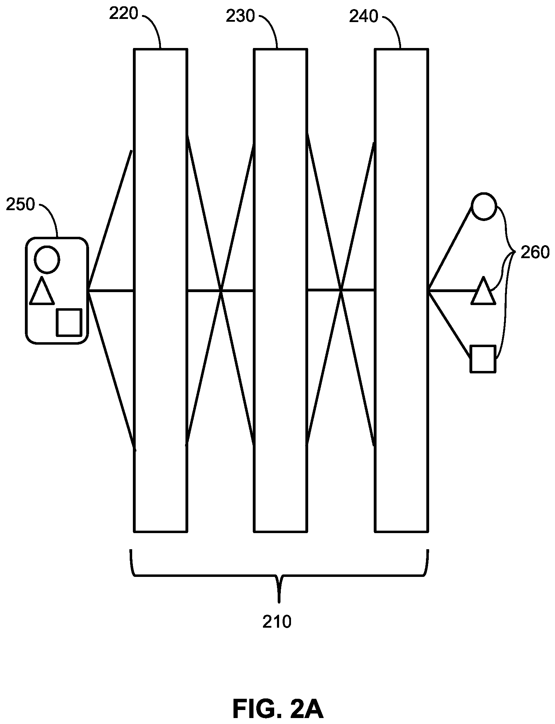

FIG. 2A is a diagram illustrating a simplified machine learning model 210 utilized for object identification and attribute determination. As shown in FIG. 2A, and described in further detail below, one implementation of the machine learning model can include multiple layers such as input layer 220, hidden layer 230, and output layer 240. The machine learning model can receive as input one or more images 250 (e.g., a video) having various objects in the one or more images. By analyzing regions of the image(s), the machine learning model can detect and/or classify objects 260.

An AI algorithm (herein also referred to as a machine learning model (ML)) can be implemented for detection or segmentation of an object and/or assignment of attributes, spatial relationships, and/or other information to such objects. A deep neural network comprising a convolutional neural network and/or a recurrent neural network can be used to detect or segment objects or areas of interest in images provided to it. For example, individual images in a video may be presented as an input to a convolutional neural network that performs detection or segmentation for objects. Other AI algorithms such as linear regression, random forests, support vector machines, template matching, filtering and thresholding, graph cuts, Markov random fields (MRF) etc. may also be used. Multiple different AI algorithms may be used to process one or more different inputs. As an example, besides object detection or segmentation using a convolutional neural network, another different convolutional neural network may be used to classify a location of the user to be a type of a room such as a bedroom, kitchen, etc. As another example, the unit of data such as an image frame may be first processed by an AI algorithm, such as a Convolutional Neural network, and the output of this network may be further processed by another algorithm such as a Recurrent Neural Network. The output of these algorithms can include a 2D and/or 3D bounding box, and/or a mask around the objects of interest, or, for audio data, a text string that processes and translates the user voice input, etc. Similarly, the output of these networks can also include confidence values for the predictions, and the ordered set of classes (different types of objects) that the detected object can be classified to.

As an example of details of the computational structure of such a machine learning model, a neural network (e.g., convolutional and/or recurrent) may be based on a large collection of neural units (or artificial neurons). The one or more neural networks may loosely mimic the manner in which a biological brain works (e.g., via large clusters of biological neurons connected by axons). Each neural unit of a neural network may be connected with many other neural units of the neural network. Such connections can be enforcing or inhibitory in their effect on the activation state of connected neural units. In an implementation, each individual neural unit may have a summation function that combines the values of all of its inputs together. In an implementation, each connection (or the neural unit itself) may have a threshold function such that a signal must surpass the threshold before it is allowed to propagate to other neural units. These neural network systems may be self-learning and trained, rather than explicitly programmed, and can perform significantly better in certain areas of problem solving, as compared to traditional computer programs. In an implementation, the one or more neural networks may include multiple layers (e.g., where a signal path traverses from front layers to back layers). In an implementation, back propagation techniques may be utilized by the neural networks, where forward stimulation is used to reset weights on the "front" neural units. In an implementation, stimulation and inhibition for the one or more neural networks may be freer flowing, with connections interacting in a more chaotic and complex fashion. In an implementation, the intermediate layers of the one or more neural networks include one or more convolutional layers, one or more recurrent layers, and/or other layers.

The one or more neural networks may be trained (i.e., whose parameters are determined) using a set of training data. The training data may include a set of training samples. Each sample may be a pair comprising an input object (typically a vector, which may be called a feature vector) and a desired output value (also called the supervisory signal). As described above, training inputs may be images, for example. A training algorithm analyzes the training data and adjusts the behavior of the neural network by adjusting the parameters (e.g., weights of one or more layers) of the neural network based on the training data. For example, given a set of N training samples of the form {(x_1,y_1 ),(x_2,y_2 ),...,(x_N,y_N)} such that x_i is the feature vector of the i-th example and y_i is its supervisory signal, a training algorithm seeks a neural network g:X?Y, where X is the input space and Y is the output space. A feature vector is an n-dimensional vector of numerical features that represent some object (e.g., an image of a room with objects to be moved as in the example above). The vector space associated with these vectors can be called the feature space. After training, the neural network may be used for making predictions using new samples (e.g., images of different rooms).

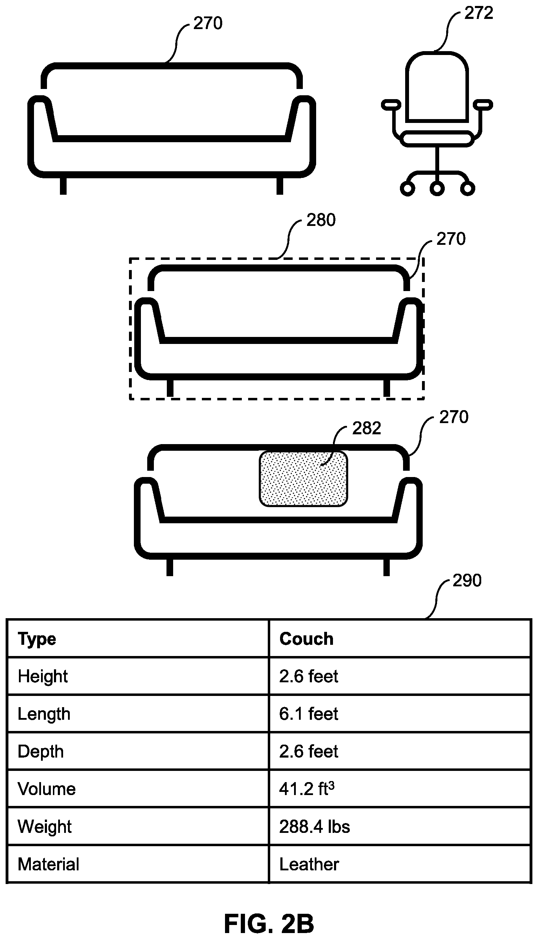

FIG. 2B is a diagram illustrating attribute determination of identified objects. The machine learning model can determine a number of attributes of the detected objects. The objects detected in a given image can have various attributes including, for example, an object identification (e.g., what it is), a dimension (e.g. length, width, height, etc.), a size (e.g., small, medium, large), a volume, a weight, etc. (other example attributes are described herein). For determining the object identification, the machine learning model may be trained using a library of different objects with known classifications, thus allowing the machine learning model to predict what type of object is depicted in a given image or portion thereof. As to determining a dimension, the machine learning model can rely on a specific detection to determine dimensions of the object. For example, if the machine learning model is able to determine an exact type of couch, then, based on accessing a data store, the dimensions of the couch can be recalled and assigned as attributes. A regression algorithm can be further applied on the data store to fine tune the estimated dimension. In another implementation, the machine learning model can implement location data (such as GPS data) or stereoscopic features, or other sensors such as infrared or laser sensors of some camera devices in order to determine actual distances in acquired images. Another machine learning model can be used to predict the distances from an RGB image based on a training data that consists of RGB image and distance input for that image on a per pixel basis. Knowing these distances, dimensions of various objects can be determined using several approaches such as using the mathematics of perspective projection and assigned as attributes. Similar to classification, the "size" of an object can be based on the specificity of the classification. For example, if the machine learning model is able to determine a very specific model of couch, which may come in different sizes, then a size label can be applied as an attribute. In another implementation, the size attribute can be based on a dimension (e.g. a small object may be anything with a maximum dimension of less than 1 foot). In some implementations, during training, items with similar volumes/weights can be combined and assigned a label to that category so the machine learning model can discern it versus other items of different sizes. One example of this is with beds. By grouping king, queen, double, twin beds and training as separate categories, the machine learning model can discern the difference between sizes of beds without needing to determine a "brand" in order to do so.

Also similarly, other attributes such as weight can be determined based on an object's classification (e.g., classifying the object exactly can permit a simple lookup of the object's weight from a data library). In other implementations, the weight of an object can be estimated by the machine learning model based on a general classification (e.g. couch) and one or more dimensions. For example, the machine learning model may have during its training been provided with couches of different sizes and their associated weights. Accordingly, the machine learning model can determine with reasonable confidence the estimated weight of a couch of a particular size. In other implementations, a machine learning model can further classify the item of a specific type (for e.g. metal chair versus plastic chair) and such inferences can be used to determine weights.

As one specific example, FIG. 2B depicts the detection and classification of a couch and associated attributes that can be determined. The top inset in the figure illustrates how the shape of an object as represented images (e.g., via edge detection or other pixel analysis techniques) can be used to readily discriminate between different objects. The trained machine learning model can predict with high confidence what type (or classification) applies to a given object. For example, there is a clear difference in image between a couch 270 and a chair 272, as shown in FIG. 2B.

Once such a classification is made (or as part of making a classification) a bounding box 280 can be established around the item that defines its extents in one or more dimensions. In some cases, the bounding box can be established prior to classification (e.g., by a user) and aid in object detection. The bounding box 280 could further be an object mask to tightly fit the object. For example, it would be very likely that if a couch was misidentified as being a chair that the confidence value of such a determination would be very low due to the fact that chairs typically do not have lengths such as determined by the bounding box.

In some implementations, the system can include a metadata database. Various attributes can be determined by applying a database of appropriate metadata to the items detected by the machine learning model. For example, the machine learning model can detect that the room has a piano in it, which is distinct from an electronic keyboard (because these two items were trained as separate classes). Then, a database of metadata could be used to look up the attributes for the piano and determine that special equipment is needed to tie the hammers. The metadata database would not have the same attributes for electronic keyboards since those don't have physical hammers. The metadata database could also be built based on previous uses of the product. For example, if most movers mark refrigerators as "not moving", this data could be used to add a rule to default refrigerators to "not moving."

As another example of attribute determination, a similar analysis can perform pattern recognition on some parts of the detected image to determine a material attribute. For example, as shown in the third inset of FIG. 2B, a portion 282 of the image can be viewed and its color, texture, etc. can be compared to various samples in a library. Again, the trained machine learning model can determine a most likely candidate for the material and assign that material to the object's material attribute. In some implementations, a different (e.g., second) machine learning model (trained to identify materials in images) can be utilized for determination of the material. For example, one machine learning model can be used for object detection and identification. Then, once the objects have been detected and/or identified, the second machine learning model can take the portions of the images inside the bounding boxes generated by the first machine learning model and perform a material classification to establish the material attribute for that object. In some implementations, the secondary machine learning model approach may be used for detecting age/condition (the secondary machine learning model could be trained on scratches, dents, water damage, cracks, etc.).

As shown at the bottom of FIG. 2B, an object can be represented in computer memory by an instantiation (e.g., memory objects, table entries, multidimensional arrays, etc.) having various attributes. For the example above of a couch, the table 290 shown provides examples of attributes that could be assigned automatically to the detected object (or item). As discussed further below, such automatic assignment of attributes can aid in quickly populating relevant data sets needed for the schemas of a client user or a service provider user, and the schema translator they are utilizing.

As used herein, the term "object" can refer to objects that can readily be moved (e.g. furniture, personal belongings, etc.). However, the term "object" can also include "non-objects" or "structural components" that typically are not movable but can be identified from image data. For example, such "non-objects" or "structural components" can include floors, walls, ceilings, doors, etc.

Somewhat distinct from objects are "items." As used herein, "items" refer to a particular subset of identified objects. For example, from an image of a room, objects such as furniture and doors may be detected. However, the "items" may only be taken as the furniture.

As used herein, the term "machine learning model" can refer to a neural network type of algorithm as described above, but also includes any other programs that may aid in the determination and or use of information output by such learning algorithm as described herein. For example, if a neural network part of the machine learning model identifies an object to be a specific type of couch, then another program can use that information to access a lookup table to merely recall various attributes and assign them to the item. In this way, not every operation described herein requires a learning algorithm and may instead be implemented by more conventional computer operations.

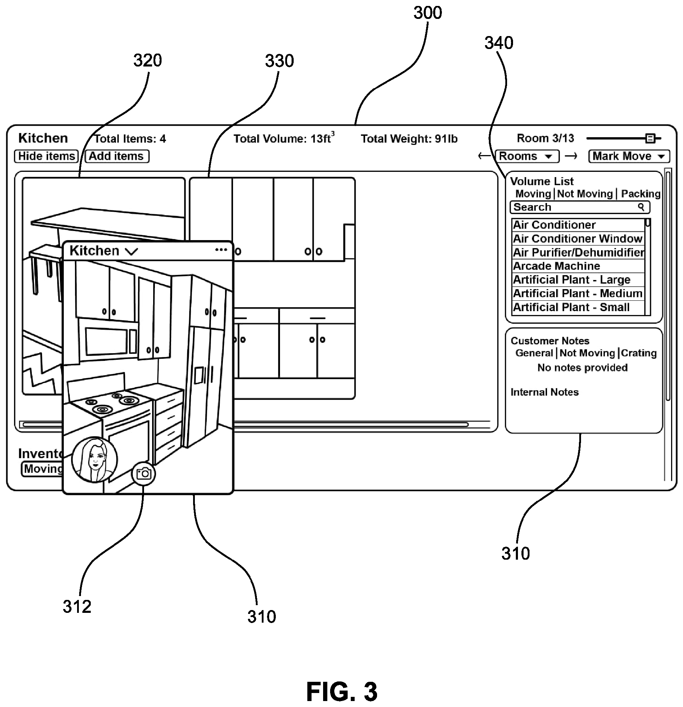

FIG. 3 is a diagram illustrating an exemplary display of snapshots from the video feed as displayed at a service provider device in accordance with certain aspects of the present disclosure. Depicted in FIG. 3 is an exemplary service provider display 300 generated at graphical user interface of the service provider device. The service provider display can include a real-time video display (e.g., a video feed 310) of video taken at the client device. Behind the video display are two examples of single frames acquired from the video feed (e.g., "snapshots" 320, 330). Also shown on the right are examples of objects (accessed via a menu 340) that can be selected by the service provider user to modify the attributes (e.g., volume) of any of the identified objects, as discussed further herein. Also shown is an exemplary notes area 350 to allow recording of notes associated with the list. As the service provider user may require more information than the client user, such notes may only be visible at the service provider device.

The population of the list (which can be any listing of any items and not necessarily an inventory of goods) can be based on the images or video acquired with the client device. To speed processing and reduce data transmission overhead of object detection, some implementations can include extracting a single frame from a video feed or using a single still image such as that acquired as a digital photograph. However, in some implementations, rather than a single frame being used for the snapshot, multiple frames can be used (e.g., via averaging, interpolating, etc.) the data in the frames. Some implementations may also include analyzing each frame independently and selecting a most likely attribute based on the results (e.g., object detection or attribute determination) over time. For example, if a bed was detected as a queen size bed in 9 out of 10 frames and a king size bed in 1 frame, it is more likely that the bed is queen sized than king and the queen size bed would be used for the object identification and its various attributes.

The FIG. 3 illustration of an exemplary service provider display at the service provider device depicts three examples of single frames from the video feed. These snapshots can be acquired during the video feed (e.g., during a video consultation), though in other implementations, can be acquired after the video feed by replaying video file. The acquisition can be based on commands received at the service provider device. For example, in an implementation, the client device can be held by the client user and move in an environment, acquiring video along the way. The service provider user, who may be in two-way communication with the client user, may, at the service provider device, click a button 312 or other input mode at the service provider display for generation of the snapshot. The snapshot can then be added to a snapshot library which may be stored at the service provider device and/or on a server. As shown in FIG. 3, snapshots can be added to the service provider display for reference while the video feed progresses. In other implementations, the schema translator can automatically take snapshots during the video feed, for example, utilizing optical flow techniques or Kalman filtering. This can enable accurately detecting all objects in a particular environment. For example, upon detection of objects that are not in a previously acquired snapshot, additional snapshots can be taken thus developing a comprehensive library of objects included in the video feed.

The automation previously discussed can be implemented by the machine learning model identifying, during the video feed, one or more objects in a snapshot. The identification of objects in the snapshots can be performed in a manner similar to that discussed above - sending the snapshot image to the machine learning model for object detection and attribute determination. As described, the output of the machine learning model can then be imported into the list for populating items and their attributes.

Also, during the video feed, the items can be added to a list based on the identified object. This automatic addition of the items to the list can provide a significant efficiency increase to the process by allowing both the client user and the service provider user to see the list as it dynamically forms during the video feed (e.g., responsive to the acquisitions of various snapshots). The interface at the service provider device can also allow for editing of items which may have been already added automatically by the schema translator. For example, the identity of an item can be changed (e.g., accessing a list of items and assigning one to a selected object in a snapshot). In this way, items can be added, removed, or edited/corrected in the list by the service provider user.

As previously described, the machine learning model can automatically determine attributes for the identified objects. These attributes can then be imported into the list along with the object itself. For example, a detected drawer may, based on analysis of the image data, have a determination made by the machine learning model of the approximate volume of the drawer. This volume can then be assigned to its volume attribute such that the total volume of items in the list are increased by that amount. In the example shown in FIG. 3, the machine learning model has identified a stool, a carpet, and several drawers and cabinets and may be added to the list.

Similar to editing the items themselves, the schema translator can have the capability to allow editing of attributes of selected items based on input received at the schema translator from the service provider device. For example, an item can be selected from the list of items. The service provider user can then enter values, select from menus, or any other input method to change the attribute of the selected item, with this data relayed to the schema translator. For example, if the machine learning model assigned a particular size to a refrigerator and that size is known to be incorrect, then the service provider user could edit the size attribute of the refrigerator to a particular value. In some implementations, the editing of attributes of selected items can, alternatively or additionally, be based on input received at the schema translator from the client device. In yet other implementations, the machine learning model can, alternatively or additionally, edit the attributes (e.g., based on changes to other attributes that may affect classification or attribute determination).

The addition/editing of items and/or attributes occurring during the video feed can significantly increase the effectiveness of the video consultation as the service provider user is capable of receiving feedback from the client user. Such feedback can allow the updating of the list and any object attributes during the consultation rather than requiring separate consultations, or worse, an inaccurate list being generated.

Additionally, the display of snapshots at the service provider device can include other features that may not be relevant for display at the client device. For example, as seen in FIG. 3, previously acquired snapshots (shown in the background behind the real-time video display) are shown as having bounding boxes that may have been used by the machine learning model to identify the objects. As also seen, the display may include representations of one or more attributes such as the name of the object. In this way, the list stored in computer memory can include any of, for example, the items, their attributes, tags (e.g., moving, not moving, fragile, etc.), or text notes that may be entered by the service provider user and/or client user via their respective graphical user interfaces.

In some implementations, the machine learning model can determine based on identification of the item, additional items and, optionally, attributes of the additional item. For example, if the machine learning model was trained to implement a relocation, then if a mattress was identified, this input could result in an output of supplemental items that would be needed for relocation of the mattress, such as a mattress crate, a dolly, etc. Accordingly, the list may be updated based on the one or more additional items or the one or more attributes. These added items may also have attributes associated with them that affect the list. For example, the addition of a mattress crate can change the cumulative volume by that of the mattress crate rather than the volume of the mattress (which volume attribute may be set to zero with this assumption). Also, in this example, the weight attribute would be the sum of mattress and the mattress crate rather than just the mattress crate.

In some implementations, additional functionality can be provided to allow the service provider user to add items to the list that may not have been detected by the machine learning model. For example, based on input received from the service provider user at the service provider device, a bounding box can be generated around a portion of a snapshot and/or a portion of a video feed. The service provider user can use various input devices to draw such a bounding box (e.g., mouse, touchscreen, etc.). The bounding box can provide additional information for the machine learning model to identify, by analyzing the portion of the snapshot, an identified object in the bounding box. For example, the missed object may be similar in appearance to the background and thus not distinguished. If a bounding box is selected that includes only (or substantially) the missed item as seen by the human user then the reduced image received by the machine learning model may be able to allow identification of the missed item. The identified object can then be added to the list.

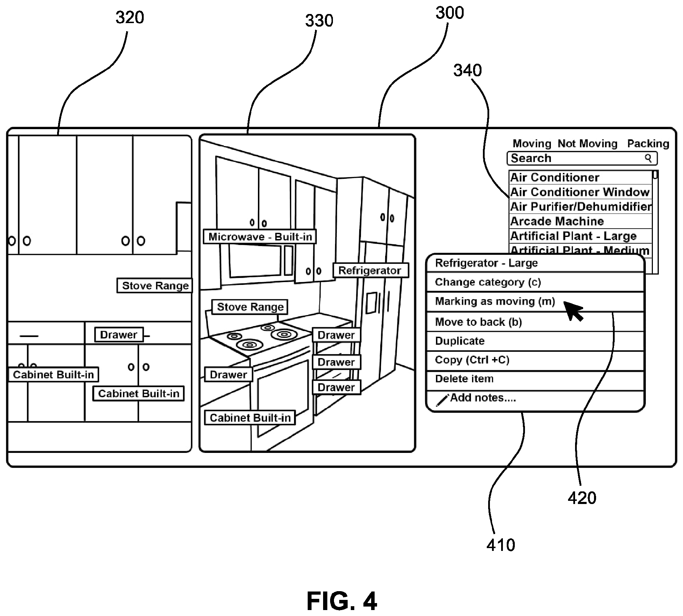

FIG. 4 is a diagram illustrating an exemplary display at the service provider device depicting updating of attributes in items identified in the snapshots. The depicted service provider display is similar to that shown in FIG. 3 but does not include the real-time video display. Items identified in the snapshot can be edited based on input received at the schema translator from the service provider device. Such editing can include, for example, editing one or more attributes of the item, adding an item (along with any attributes), deleting an item (and/or any of its attributes), etc. One example of such is depicted as the service provider user utilizing a pop-up menu 410 for the refrigerator identified in the snapshot and presently in the list. As shown, the service provider user can select a menu item 420 to mark it as being moved (setting an attribute of the item to "moving"). This instruction to change the attribute can then be relayed to the schema translator for updating the service provider schema (i.e., details of the list that the service provider user needs) and/or client schema (i.e., the details of the list that the client user is presented with). Such capabilities can allow for dynamic updating of the list based on the edited item. Similarly, such functionality can exist in implementations where the client device, or the machine learning model, can add/remove/edit the items identified in the snapshot based on input received at the schema translator by any device (e.g., any combination of the service provider device or client device). The list may then be updated based on the edited item, as described above.

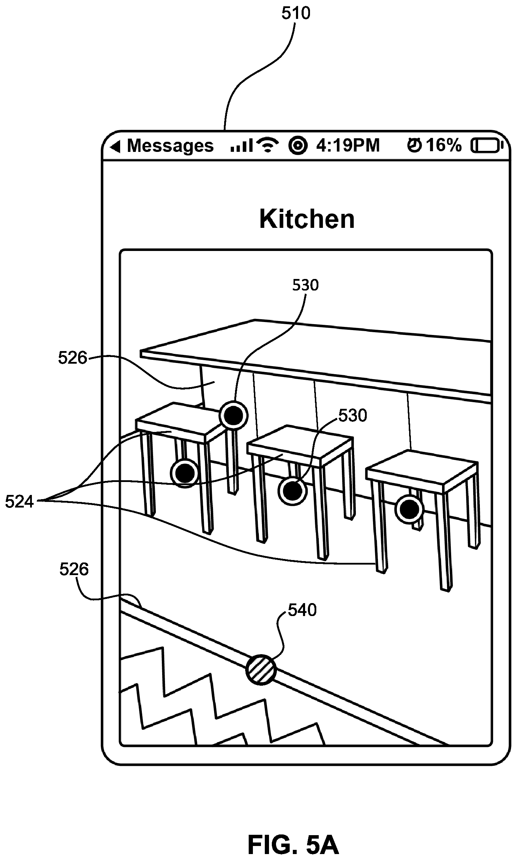

In some implementations, the snapshots acquired by the service provider device can be transmitted to the client device for display to the client user. For example, the snapshots displayed at the service provider device can be selected and transmitted as image files to the client device. Optionally, the schema translator can cause one or more graphical representations associated with the item as obtained from the list to be added to the displayed snapshot. In yet other implementations, input can be received at the service provider device from the service provider user that causes the graphical representations displayed at the client device to be updated in real-time. For example, the service provider user can change an attribute about an item in the snapshot. The change can then be relayed to the schema translator which then can cause the display of a corresponding change at the client device. An example of such can be the service provider user changing the status of an item from "not moving" to "moving." As illustrated later in FIGs. 5A-C, a visual indicator at the client device (e.g., a color of a dot on the item indicating whether it is to be moved) can then change color in response to the editing of the attribute. In other implementations, the graphical representation can be an image of the item or an image representative of the item. For example, for a bed that is in the inventory list, the graphical representation can be a picture of the client user's bed from the snapshot or a premade graphic of a generic bed.

Synchronized interactions between the client device and the service provider device can allow a consistent understanding and verification of the list as it is developed during use. For example, the list can be shared between the service provider device and the client device such that the graphical displays of both devices show a representation of the list. As described further below, the representation may be the same on both devices but optionally may be different (e.g., simplified at the client device). One implementation to provide such a shared list can include, for example, generating a service provider display for display at the service provider device. The service provider display (e.g., the appearance of the browser window or application running at the service provider device) can include some or all of the items in the list displayed as entries in a table, a scrolling panel on one side of the service provider display, or any other mode of graphical display of the list. A similar client display can be generated for display at the client device. As the client device and service provider device can be in communication with each other via the schema translator, translator can periodically check for (e.g., monitor) user input by the service provider user that changes the list. Such monitoring can include performing checksums on the local copy of the list at the service provider device against the current copy of the list at the schema translator. When a difference is detected, the delta between the two lists can be used to update the list at the schema translator based on the changes made by the service provider user. The checking can be essentially in real-time (e.g., multiple times per second), such as by using UDP connections or TCP with long polling techniques on the client device. In other implementations, the checking can be responsive only to detected user input at the service provider device (e.g., keyboard entry, mouse scroll, finger scroll, etc.). Accordingly, the service provider display and/or the client display can be updated based on the updated list.

In general, it is contemplated that the service provider display may contain information from the list that is not in the client display. As previously mentioned, this functionality can enable the client user to see a simplified version of the list, whereas the service provider user may see a more detailed version of the list with information the service provider user needs in order to complete the task. In other implementations, this can be reversed such that the client display may contain information from the list that is not shown on the service provider display. For example, client display may provide functionality for the client to take notes or annotate selected items in the shared snapshots. These features may be stored locally in memory for client's personal use or may be shared, upon instruction at the client device, with the service provider device. In some implementations, text notes sent from the client device can be analyzed by the machine learning model to convert the text notes into attributes which can then be applied to a particular item. In yet other implementations, both of the above can be true in that the service provider display and the client display can both contain information not immediately available to the other.

Similarly, in some implementations, the system can monitor for user input by the client user at the client device where such input changes the list. For example, the user can cause, by interaction with the client display, that an item currently marked as being "moved" should have its appropriate attribute change to "not moved." The list can be updated based on the changes made by the client user. Then, as with other implementations herein, the displays at both devices can then be updated to reflect the client-initiated changes.

In some implementations, to facilitate interaction between the client user and the service provider user, a service provider video feed can be generated by a service provider camera at the service provider device. The service provider video feed can be sent to the client device such that the client user and service provider user can have improved communication. Some implementations can include an inset video of the client user taken by a client-facing camera at the client device, which inset video can be displayed in the service provider display. Similarly, an inset video of the service provider user can be taken by a service provider-facing camera at the service provider device and can be displayed in the client display.

FIG. 5A is a diagram illustrating an exemplary display at a client device depicting attributes in items identified in a first snapshot 510 (e.g., as taken from video feed 310). At the client device, a client display can be generated depicting snapshots that were taken by the client device at the instruction of the service provider device or the client device. In FIG 5A, several objects 520 have been identified in the depicted snapshot. Specifically, a rug 522, three stools 524, and a cabinet 526. As shown, simplified graphical indications 530 of their attributes may be displayed. For example, the small circles associated with each item can indicate a particular attribute such as moving, not moving, fragile, etc. Such graphical indicia can vary in shape, color, pattern, etc. to communicate to the client user information about the identified items. In the illustrated example, the rug 522 has a different graphical indicia 540 than the other items, indicating that it is "valuable" and that such is an attribute of the item.

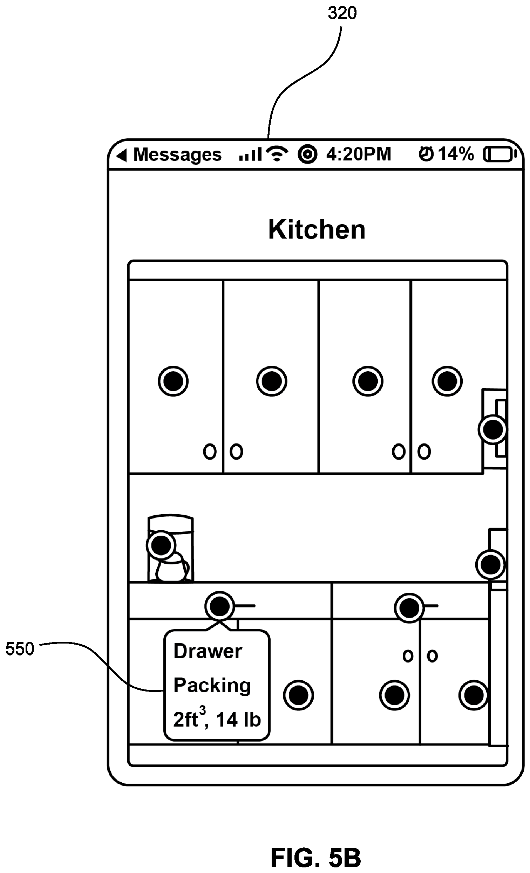

FIG. 5B is a diagram illustrating an exemplary display at a client device depicting attributes in items identified in a second snapshot 320. Here, a number of items such as cabinets, drawers, kitchen items, etc. have been identified. As with that shown in FIG. 5A, graphical indications can be included. However, also depicted is an implementation where specific information about the item is displayed in a text format 550. In this case, a drawer is identified by name, its status ("packing" - contents to be packed), it's estimated area and the estimated weight of its contents (as can be estimated by the machine learning model based on the location (kitchen), dimension, and training data of the weight of such items.

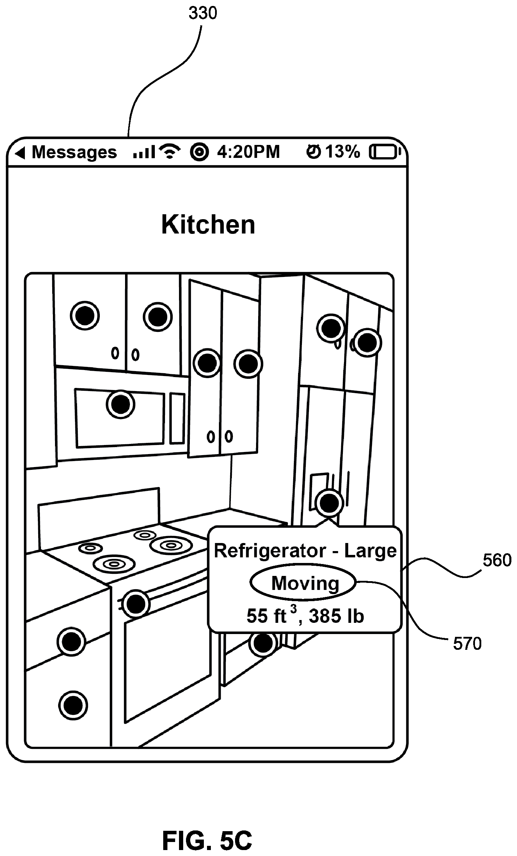

FIG. 5C is a diagram illustrating an exemplary display at a client device depicting attributes in items identified in a third snapshot 330. As previously discussed, the service provider user has the capability to change the attributes of detected items. In the third snapshot, a refrigerator has been detected. However, in this example, the machine learning model may have initially set its "moving/not moving" attribute to "not moving" based on an assessment that such a refrigerator typically does not move in a relocation. However, upon receiving feedback from the client user, the service provider user can interact with service provider display (as shown in FIG. 4) to cause the respective attribute of the refrigerator item to change to "moving." This update can be reflected in the graphical indication 560 concurrently displayed at the client device showing the updated attribute 570, allowing the client user to confirm the change. Also shown in the graphical indication 560 are other attributes: size, volume, and weight.

Returning to FIG. 1A, and as described above, in some implementations, a live video feed may be relayed from the client device to the service provider device to cause a substantially simultaneous display of the video feed at the service provider device. However, in other implementations, the video feed may not be present. For example, if a service provider user is sharing an estimate, and is talking to a client user, but there is no camera, the prompting operations described herein can still be performed (e.g., based on previously generated images and/or video, a previously generated inventory list, etc.) and the discussion during the call. The call may comprise an audio only remote consultation, for example.

Multimodal signal processor 118 is operatively coupled to schema translator 116. Multimodal signal processor 118 is configured to analyze an audio stream from a consultation (e.g., a videoconference, an audio call, or other consultation) between a service provider user and a client user in combination with one or more identified objects to extract semantic and contextual meaning from speech content of the service provider user and the client user. In this context, the multimodal signal processor refers to a processing module - implemented in software, hardware, or a combination thereof - that ingests and fuses data from multiple modalities, namely audio input and visual object recognition output, to create a comprehensive understanding of a consultation session.

The coupling between multimodal signal processor 118 and schema translator 116 facilitates real-time cross-referencing of spoken language and visual context. For example, when a client user says, "That's my antique dresser," the system can associate the spoken reference with a previously detected object classified as "dresser" by the schema translator. This fusion of audio and visual data enables the system to understand not only what objects are present, but also how users are referring to or discussing them in context, which is important for generating relevant prompts and guiding next steps in the consultation.

Multimodal signal processor 118 is configured to transcribe the audio stream using automatic speech recognition techniques and/or other techniques. In some implementations, extracting semantic and contextual meaning from the speech content of the service provider user and the client user comprises identifying entities and context in transcribed content. Entities may comprise tokens in the transcribed content associated with the one or more objects, and/or identifiable items or concepts that have meaning within the one or more images and/or video of the location associated with the client user and/or conversation between the service provider user and the client user, and/or other entities. Context comprises tokens in the transcribed content associated with at least one of surrounding information, background, or situational factors present in the one or more images and/or video of the location associated with the client user and/or conversation between the service provider user and the client user that influence determining the prompts, for example.

In some implementations, the automatic speech recognition performed by multimodal signal processor 118 uses domain-adapted language models to produce text transcriptions that are optimized for home service consultations. Entity recognition may be performed using named entity recognition (NER) tools, custom-trained on vocabulary specific to inventory management, moving services, or logistics. An "entity" may be a noun, object name, product model, or service term relevant to the task - e.g., "TV," "wardrobe box," or "valuation coverage." "Context" in this framework refers to information inferred from linguistic, spatial, and temporal cues - for example, identifying that a mention of "basement stairs" relates to the logistical complexity of moving heavy furniture, or that "need this done by Friday" indicates urgency. These insights inform the downstream prompt generation, enabling prioritization of time-sensitive or logistics-related prompts that might otherwise be missed. The combined entity and context extraction pipeline allows the system to build a rich, session-specific semantic model of the conversation, among other advantages.

In some implementations, multimodal signal processor 118 is configured to extract the semantic and contextual meaning from the speech content of the service provider user and the client user using a trained natural language model. In some implementations, multimodal signal processor 118 comprises an encoder-decoder transformer configured to transcribe speech, a large language model with JSON output configured to query the transcribed speech, and/or other components. The natural language model may be a transformer-based architecture such as BERT, T5, Gemini, or Claude, for example; Llama, Gemma, or Bespoke Minicheck models, and/or other components trained or fine-tuned on prior service provider user and client user consultations and/or other information. These models interpret sentence structure, intent, and conversational dynamics in real time. The encoder-decoder transformer may be optimized to map spoken utterances into structured JSON objects that represent candidate prompts, identified entities, and their contextual attributes. For example, if the client user says "Can you pack this for me?" while the schema translator identifies a fragile item in view, the output JSON may include { "prompt": "Offer packing service", "object": "glass table", "priority": "high" }. These structured representations may be forwarded to prompt generator 122, which applies additional logic (e.g., prioritization, suppression, snoozing) and communicates with display module 124 to unobtrusively surface relevant prompts to the service provider user.

In some implementations, multimodal signal processor 118 is configured to analyze only a most recent portion of the audio stream from the consultation to extract the semantic and contextual meaning from the speech content of the service provider user and the client user. For example, the most recent portion of the audio stream may comprise up to a most recent 30, 45, 60, or 90 seconds of the audio stream from the consultation. This approach enables low-latency responses and ensures that the prompts (described below) are timely and aligned with the current phase of the conversation. Multimodal signal processor 118 may implement a rolling audio buffer, for example, that continuously stores and discards audio in real time, minimizing the need for long-term storage while enabling near-instantaneous analysis. By focusing on the recent conversational window, multimodal signal processor 118 avoids overprocessing historical context and instead focuses on the most actionable insights. This may be important for maintaining a fluid user experience and for detecting when a suggested prompt has been implicitly addressed or should be re-surfaced as a "nudge," as one possible example.

In some implementations, multimodal signal processor 118 is configured to obtain historical estimate data, real-time pricing data, contextual metadata, and/or other information associated with the one or more objects (e.g., from external resources 146, data store 129, and/or other sources). The contextual metadata may include location-based pricing models, prior client user interactions, known logistical constraints, and/or other information. The integration this data enables prompt generation to be personalized and transaction-aware. For example, historical estimate data may include previous cost estimates for the same client user, similar items in the same zip code, etc. Real-time pricing data might pull from APIs connected to internal quoting tools or external freight providers. Contextual metadata may include metadata such as regional demand fluctuations, average service duration for similar moves, user profile information, insights such as regional traffic constraints, known weather patterns, previous client preferences, cost of lumber (e.g., for building wooden crates), time of week (e.g., weekends are usually more in demand than weekdays), exchange rate data (e.g., for international moves), what other salespeople at a service provider company are able to book during the same time, for example, and/or other contextual metadata. This enriched dataset may be provided to prompt generator 122 to influence not just what prompts appear, but when and how they appear. For example, if a prompt to offer insurance coverage becomes statistically relevant based on location, object value, and historical acceptance rate, the system may proactively suggest it early in the consultation. These capabilities support the larger goal of enabling a seamless, one-call close by surfacing the right prompts at the right time, for example.

Prompt generator 122 is operatively coupled to multimodal signal processor 118 and schema translator 116. Prompt generator 122 is configured to generate contextually relevant prompts based on at least (i) identification of the one or more objects, (ii) the audio stream, and (iii) the semantic and contextual meaning. The prompts are configured to guide the service provider user toward completing a transaction with the client user. Prompt generator 122 may comprise a neural network, a collection of neural networks, a large language model, an encoder-decoder transformer, and/or other components.

Prompt generator 122 may act as a decision-making engine that synthesizes data inputs from the audio and visual domains described above to produce real-time, actionable cues. Being operatively coupled means that prompt generator 122 receives real-time signals from the schema translator 116 (e.g., recognized objects, object attributes) and from multimodal signal processor 118 (e.g., transcribed speech, recognized entities, and contextual features). A prompt may include text, graphics, or other visual indicators rendered in a user interface that suggest, recommend, or remind the service provider to take a specific action - such as asking a follow-up question, offering a service, or progressing toward transaction completion.

Prompt generator 122 may be implemented using deep learning technologies, including encoder-decoder architectures (e.g., T5 or BART), domain-adapted large language models (LLMs), and/or recurrent or convolutional neural networks tuned for real-time inference. These models are trained or fine-tuned using dialogue corpora, historical service data, annotated consultations, and/or other information. Prompts may vary in format and urgency, ranging from simple suggestions (e.g., "Ask about packing services") to complex procedural recommendations (e.g., "Discuss insurance coverage options for high-value artwork").

In some implementations, prompt generator 122 may utilize a lookup table. A lookup table refers to a data structure that stores predefined associations between object types, attributes (e.g., item categories, sizes, typical weights), spoken words and/or phrases, required conversational queues, etc., and corresponding values or actions (e.g., pricing, packing requirements, prompt triggers, etc.). Prompt generator 122 may use lookup tables to quickly retrieve relevant information during a consultation without performing real-time computation or inference. For example, if a sales manager says "always ask about the size of the home", the service provider user needs to ask about the size of the home. In this case the prompt is hard-coded because of the sales manager requirement. Prompt generator 122 can also use the lookup table approach in combination with images and/or video (e.g., such as when a TV is observed in a video and the prompt is "When the AI sees a TV, suggest packing services and mention the damage risk if self-packed." Some and/or all of these techniques may help a service provider user close a consultation efficiently, such as finalizing cost estimates or digitally signing service agreements within a single session, among other advantages.

Prompt generator 122 is configured to determine whether a particular prompt has been addressed during the consultation, including whether a corresponding question was asked and/or whether a response was received. To achieve this, prompt generation 122 is configured to continuously monitor both the speech content (via live transcripts from multimodal signal processor 118) and the ongoing consultation itself. "Addressed" in this context refers to the completion of an implicit or explicit dialog sequence triggered by a prompt. For example, if prompt generator 122 generates a prompt such as "Ask if the client needs temporary storage," it will track whether the service provider user has asked a relevant question and whether the client has replied. This can be done using dialogue matching algorithms and LLM-powered intent detection, for example, and/or using other techniques. This analysis may also include semantic matching against alternative phrasings or paraphrases (e.g., "Do you need us to hold your items for a bit?" may satisfy the original prompt in this example about needing temporary storage). These determinations support responsive prompt management, allowing prompt generator 122 to remove fulfilled prompts or take follow-up actions as needed.

Prompt generator 122 is configured to dynamically prioritize or suppress the prompts based on conversational progress; monitor in real-time whether the prompts have been addressed through natural speech; and automatically dismiss or escalate the prompts based on conversational cues. Dynamic prioritization refers to the prompt generator 122's ability to rank prompts based on factors such as conversation phase, object importance, or time sensitivity. For example, a prompt to confirm stair access may be escalated if bulky furniture is detected in the schema translation and no relevant discussion has occurred. Suppression logic may delay or withhold prompts that have low relevance in the current context, such as a packing service suggestion when the client has already declined packing earlier in the consultation.

Real-time monitoring of speech input allows prompt generator 122 to adaptively manage its inventory of prompts without user interaction. Prompts may be escalated - e.g., repeated or reworded - if a certain issue remains unresolved, while others may be dismissed once the conversation organically addresses the concern. These intelligent prompting techniques make system 100 feel intuitive and unobtrusive to the user, preserving the human-centric flow of a sales interaction, for example.

In some implementations, prompt generator 122 is configured to generate the prompts based at least in part on the historical estimate data, the real-time pricing data, the contextual metadata, and/or other information. Historical estimate data may include stored quotations from prior consultations involving similar objects, similar geographical locations, similar move parameters, etc.. Real-time pricing data may be obtained from integrated pricing engines, transportation APIs, or other external systems reflecting up-to-date labor and material costs. As described above, contextual metadata may include metadata such as regional demand fluctuations, average service duration for similar moves, user profile information, insights such as regional traffic constraints, known weather patterns, previous client preferences, for example, and/or other contextual metadata.

Prompt generator 122 uses this additional data to tailor prompts in a personalized and data-informed manner. For instance, in a high-cost zip code with known elevator limitations, prompt generator 122 might generate an early prompt asking about stair access or building restrictions. By factoring in these external signals, prompt generator 122 aligns its suggestions with operational feasibility and commercial strategy, which improves conversion rates and client satisfaction, among other possible advantages.

In some implementations, prompt generator 122 is configured to facilitate snoozing prompts until later in the consultation such that a snoozed prompt disappears from the display, but retains context on the object or scenario that caused the snoozed prompt such that the service provider user can view and address the snoozed prompt at a later time. Snoozing refers to a deferred prompt handling mode in which a prompt is temporarily hidden from view based on user behavior, automated rules, or other factors. For example, if prompt generator 122 detects that the service provider user is engaged in a pricing discussion, a prompt suggesting furniture disassembly may be snoozed until that topic is completed. Prompts can also be snoozed based on call-based context. For example, a service provider user could select "snooze until call wrap up" (e.g., displayed on a graphical user interface as described herein) that will be triggered when a listing of objects (e.g., inventory) has been completed and the client user and the service provider user are reviewing the list together. As another example, prompt generator 122 may be configured to facilitate prompt snoozing in time-based increments, e.g., for five minutes, for 10 minutes, for 15 minutes, etc. Importantly, snoozed prompts may retain their full contextual linkage, including triggering object(s), prior dialog history, and metadata annotations, for example. This allows for accurate reactivation or revisiting of the prompt later in the session, either manually or automatically. For some interfaces, prompt generator 122 (and/or display module 124) may be configured such that snoozed prompts may be accessed through a sidebar or other interface, ensuring that important suggestions are not permanently lost - even if temporarily postponed.

In some implementations, prompt generator 122 is configured to automatically record whether the service provider user follows a given prompt, and to provide post-consultation analytics indicating prompt success rate. This functionality supports robust analytics and sales enablement reporting. Prompt success may be measured in terms of user compliance (e.g., prompt was followed), client engagement (e.g., response received), business outcome (e.g., additional services booked), and/or based on other metrics. These metrics may be tracked using a session logging system and evaluated using statistical models or custom rulesets, for example.

Post-consultation analytics can include dashboards for individual service providers (e.g., movers), comparative performance across service provider teams, insights for sales managers, etc. These analytics are configured to help identify high-performing behaviors and uncover areas for coaching or system optimization. For example, if movers (e.g., one possible example of a service provider) who follow valuation coverage prompts consistently close higher-value jobs, prompt generator 122 may prioritize that prompt in future sessions. This feedback loop reinforces best practices and improves organizational performance over time, among other advantages.

Display module 124 is operatively coupled to prompt generator 122, multimodal signal processor 118, and schema translator 116. Display module 124 is configured to cause display of the prompts on a service provider device (e.g., a desktop user device 138 and/or a mobile user device 134 associated with the service provider user) during the consultation. Display module 124 may cause display on a graphical user interface of a native application 144 and/or a web browser 142 of user devices 134 and/or 138, for example. In some implementations, display module 124 is configured to cause unobtrusive display of the prompts on the service provider device during the consultation in a field or window proximate to but separate from a field or window that displays a video feed (if present), and/or as part of a heads-up overlay on the video feed shown to the service provider user.

In this context, display module 124 serves as the graphical output subsystem responsible for presenting prompts and other relevant visual elements in a real-time user interface. Its operative coupling with prompt generator 122 facilitates display of contextually and semantically relevant prompts that have been dynamically generated based on current audio and visual signals by system 100. The display module's connection to multimodal signal processor 118 and schema translator 116 allows it to access real-time cues such as current conversational context, object locations, or scene complexity, which may influence visual layout or prominence of displayed prompts, for example.

An "unobtrusive" display refers to a visual element that is perceptible and accessible to the service provider user, but does not interfere with the service provider user's main task - e.g., maintaining eye contact with the video feed (if present) and/or engaging in a conversation with the client user. This may be implemented through overlays, translucent callouts, side panels, or dynamic notifications that appear and disappear based on user behavior or system logic. For example, a heads-up overlay might render a suggestion such as "Ask about valuation coverage" in the corner of the screen near the relevant object in view, using positional alignment information derived from schema translator 116.

Display module 124 may also differentiate (or cause differentiation) between device form factors. On a desktop device 138, the display may leverage greater screen real estate to separate prompts into a sidebar, while on a mobile device 134, prompts may appear as stacked cards or slide-in elements from the bottom of the screen to maintain visibility without overwhelming the video feed.

In some implementations, display module 124 is configured to cause dynamic modification of a real-time interface display based on synchronization of the one or more objects identified in the one or more images and/or video of the location associated with the client user and recognized speech, thereby improving timing precision and reducing latency in prompted service provider user and client user interaction during the remote consultation. Dynamic modification of the display refers to real-time updates to layout, content, and/or visual emphasis based on recognized objects and speech content. For example, if schema translator 116 identifies a piano in the background and the client later mentions, "That's really fragile," display module 124 may synchronize this audio reference with the object's visual position and surface a high-priority prompt such as "Offer crating service for piano."

Display module 124 may be configured such that the dynamic interface may include animations, fade-ins, or timed dismissals for visual prompts, adjusting based on whether the prompt is escalating, snoozed, or acknowledged. Display module 124 may also be configured to cause a highlight of an object visually in the feed, such as by drawing a subtle boundary box or icon tag around the piano (in this example), improving the relevance and clarity of the prompt for the service provider user. This synchronization of visual and auditory data helps eliminate ambiguity, ensuring that service provider users can act on prompts with minimal mental overhead or guesswork. The term "latency" here refers not to network speed but to cognitive delay - how quickly a service provider user understands and acts on a prompt. By reducing this latency, system 100 facilitates a more seamless and efficient conversation.

In some implementations, display module 124 is configured to render contextually-prioritized prompts as a graphical overlay in a predefined region of a live service provider device display of a video feed comprising the one or more images and/or video of the location associated with the client user. A "contextually-prioritized" prompt is one that has been ranked by the prompt generator according to relevance, urgency, historical performance, conversational context, and/or other factors. Prioritization may be based on an order prompts are manually entered into a list, a cost or dollar value attributed to a prompts (with the most accretive prompts listed first), a priority score attributed to each prompt (e.g., by a sales manager), and/or other factors. In some implementations, multiple prompts may be displayed at once. In some implementations, display module 124 causes visualizations of these prompts by overlaying them directly on the service provider user's live video interface in a predefined region - e.g., bottom-left corner, side gutter, or picture-in-picture pane, etc. These overlays may adapt in size, opacity, or visual prominence depending on user interaction patterns and/or other factors. For example, if prompt generator 122 has high certainty that a prompt is both relevant and time-sensitive, display module 124 may increase font size or introduce motion (e.g., subtle pulsing) to draw the user's attention without being disruptive.

The predefined region may be user-configurable or dynamically adjusted based on the layout of the video feed and/or other factors. If the consultation occurs on a mobile device with a small screen, the overlay may collapse into expandable icons or stacked cue cards, for example. On larger displays, prompts may be spatially aligned with the identified object in the video feed, using coordinates from schema translator 116, as another example.

Once the prompting process is completed, system 100 (schema translator 116 and/or other components) is configured to facilitate completion of a service estimate and digital agreement during the consultation (e.g., the video conference), without user interaction with a separate interface.

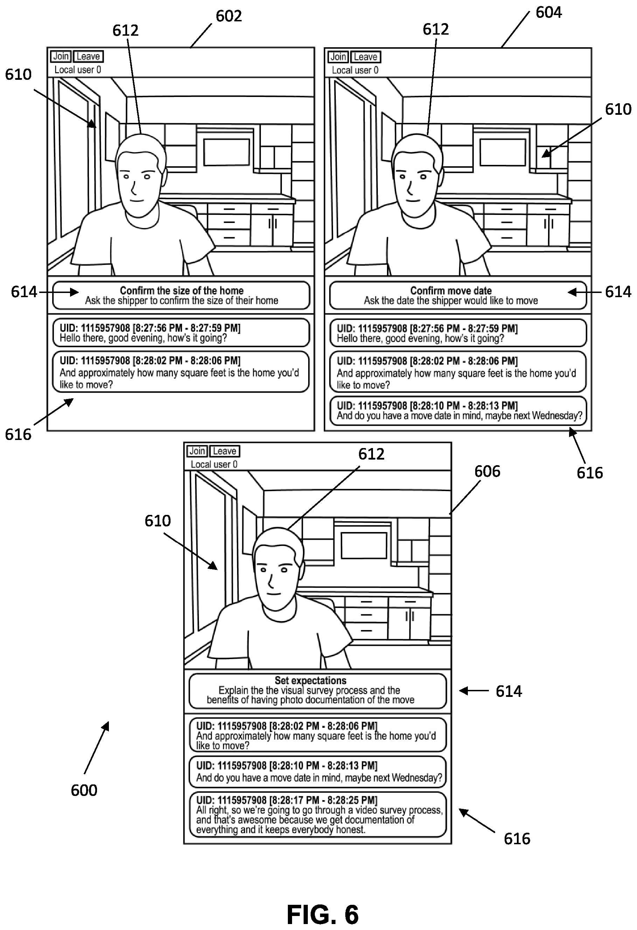

FIG. 6-9 illustrate prompting related concepts described above. For example, FIG. 6 illustrates views 602, 604, and 606 of a graphical user interface 600 (e.g., of a native application and/or a web browser shown in FIG. 1A). Views 602-606 are visible to a service provider user (not shown) on a service provider device in this example. This example depicts a videoconference about a move for a client user 612. Views 602-606 include a videoconferencing field 610 with a live video display showing client user 612, a prompt field 614, and a conversation transcription field 616. Conversation transcription field 616 is shown for demonstration purposes in this example. Typically, transcripts need not be shown live to the service provider user but are included here to enhance understanding. In the example shown in FIG. 6, as the video conference progresses, the prompts in field 614 change from reminding the service provider user to confirm the size of the home (view 602), to confirming the move date (view 604), and setting expectations for the videoconference (view 606). In addition, the conversation is transcribed as shown in transcription field 616 (with indications of a user identification (UID) and a time stamp as examples for each added transcription).

As described above, multimodal signal processor 118 (FIG. 1A) analyzes the audio stream from this consultation in combination with one or more identified objects to extract semantic and contextual meaning from speech content of the service provider user and the client user 612. Prompt generator 122 (FIG. 1A) generates the contextually relevant prompts shown in prompt field 614 based on at least (i) identification of the one or more objects, (ii) the audio stream, and (iii) the semantic and contextual meaning. Prompt generator 122 is configured to determine whether a particular prompt has been addressed during the consultation, including whether a corresponding question was asked and/or whether a response was received (e.g., as indicated by the text in transcription field 616 in this example). Display module 124 (FIG. 1A) is configured to cause display of the prompts on a service provider device (e.g., as shown in FIG. 6) during the consultation.

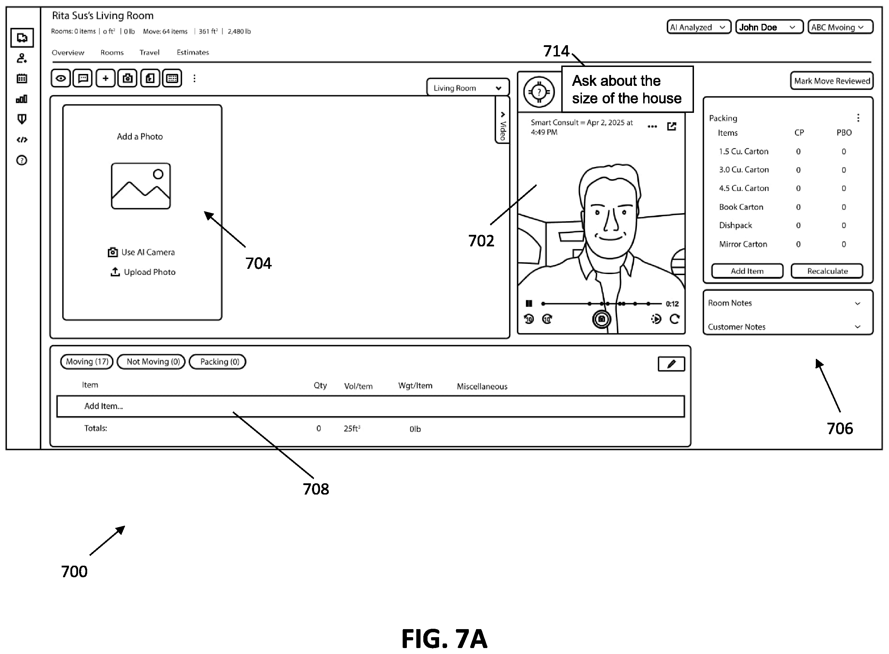

FIG. 7A illustrates another exemplary service provider display 700 generated at a graphical user interface of a service provider device (e.g., a desktop user device 138 or a mobile user device 134 shown in FIG. 1A). The service provider display 700 can include a real-time video display 702 of video taken at a client device (e.g., another mobile user device 134). Proximate the video display are example fields for obtaining single frames acquired from the video feed ("snapshots" as described above) - field 704; and attribute annotations - field 706 for noting packing requirements for a certain object. A field like this can be used by the service provider user to modify the attributes of an identified objects, as discussed further herein. Also shown is an inventory list field 708, which is empty in this example because the videoconference has just started. FIG. 7A also illustrates another example of a prompt field 714, with a reminder to "ask about the size of the house" in this example.

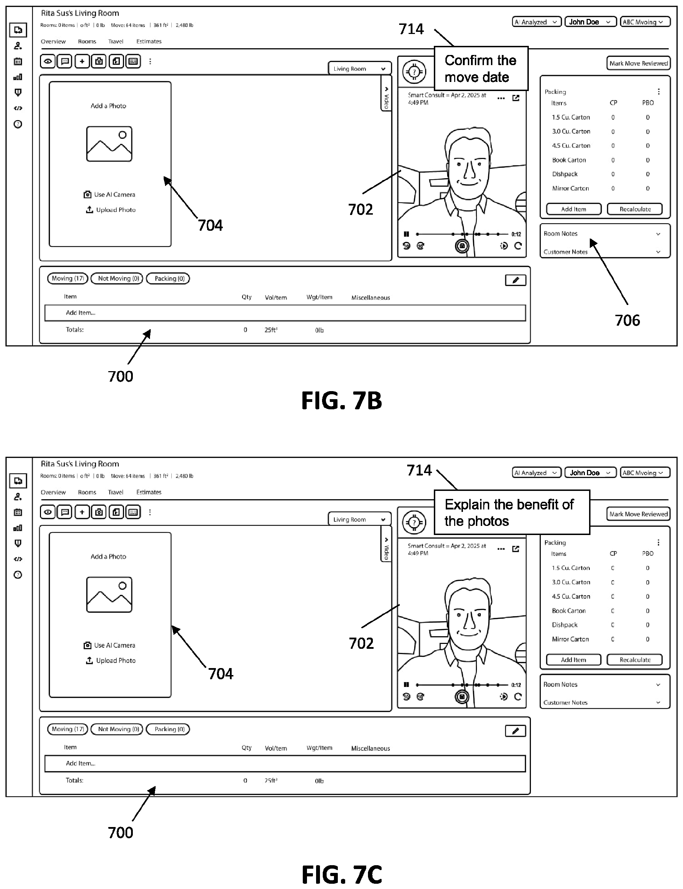

The arrangement of service provider display 700 exemplifies how various functional components of the system (e.g., system 100 shown in FIG. 1A) integrate within a unified user interface to support an efficient, guided consultation. Video display 702 provides a real-time feed from the client device, enabling live visual context for schema translator 116 (FIG. 1A) to identify objects within the environment. Field 704 allows the service provider to capture snapshots from the video, which may serve as anchor points for further visual annotation or reference. Attribute annotation field 706 enables manual entry or confirmation of object-specific data such as packing category, fragility, or item grouping, in coordination with schema translator outputs. Prompt field 714 exemplifies the unobtrusive guidance provided by display module 124 (FIG. 1A) - generating contextually generated prompts from prompt generator 122 (FIG. 1A). In this example, the prompt to "ask about the size of the house" appears without requiring direct user interaction, relying instead on monitoring via multimodal signal processor 118 (FIG. 1A) to determine whether the guidance has been addressed in natural conversation. Inventory field 708 is updated dynamically as objects are identified or confirmed, completing a feedback loop that allows the interface to serve not only as a viewing screen but also as a smart assistant for consultation success. FIG. 7B illustrates the second in an example progression of prompts displayed in the prompt field from FIG. 7A, which reminds the service provider user to "confirm the move date". FIG. 7C illustrates the third in the example progression of prompts displayed in the prompt field from FIG. 7A and FIG. 7B, and reminds the service provider user to explain the benefit of the photos (e.g., the snapshots described above).

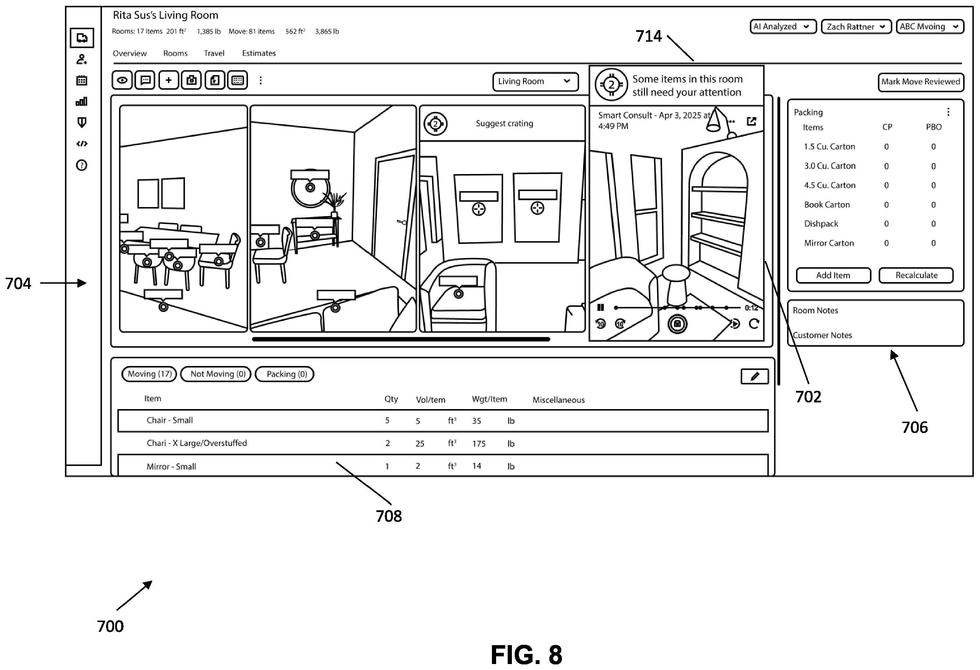

FIG. 8 illustrates an update to the service provider display shown in FIG. 7A - 7C. FIG. 8 illustrates service provider display 700 generated at a graphical user interface of a service provider device (e.g., a desktop user device 138 or a mobile user device 134 shown in FIG. 1A). The service provider display 700 includes real-time video display 702 of video taken at a client device (e.g., another mobile user device 134), which now shows an image of a room of the client user's house. Proximate the video display are example single frames acquired from the video feed ("snapshots" as described above) - field 704, now with various objects identified in each frame. Since the video conference has progressed since what was shown in FIG. 7A-7C, inventory list field 708, which was empty in FIG. 7A-7C, is now populated with three objects. FIG. 8 again illustrates prompt field 714, now with a reminder to the service provider user that "some items in this room still need your attention".

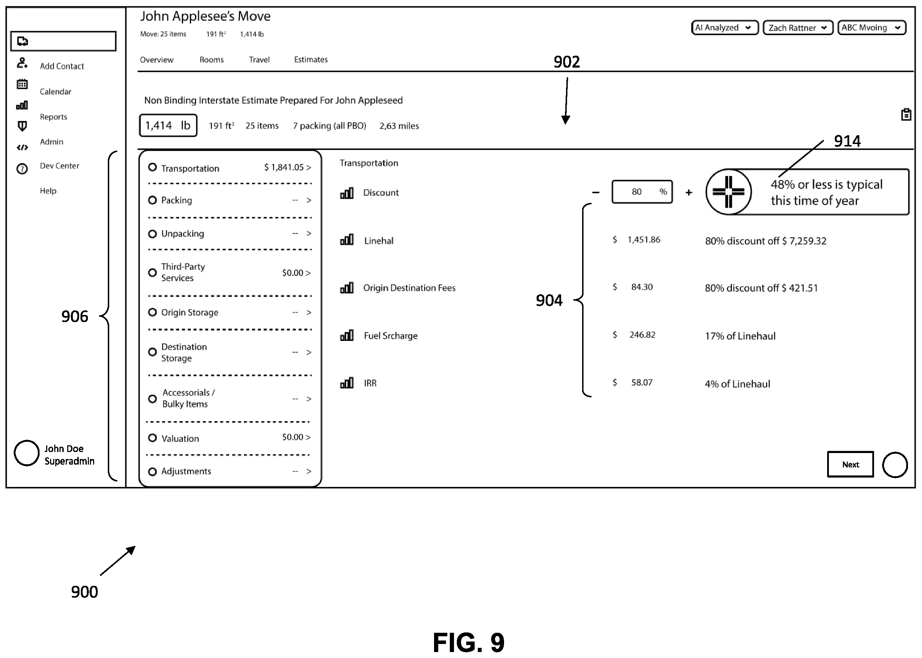

FIG. 9 illustrates another exemplary service provider display 900 generated at a graphical user interface of a service provider device (e.g., a desktop user device 138 or a mobile user device 134 shown in FIG. 1A), this time with no real-time video display. Instead, FIG. 9 shows a live estimate 902 comprising example fields 904 for providing discounts, and expandable fields 906 for tracking packing needs, unpacking needs, third party services, and other relevant information. The system (e.g., system 100 shown in FIG. 1A) may be configured such that a service provider user can edit such a field live during a consultation (e.g., a video conference, a phone call, or other consultation) with a client user. As such, FIG. 9 also illustrates another example of a prompt field 914, this time with a prompt stating "48% or less is typical this time of year" for a discount (e.g., which might be determined based on historical estimate data, real-time pricing data, and/or contextual metadata associated with the one or more objects as described above, for example).

Service provider display 900 demonstrates how the system supports dynamic estimate management in the absence of a live video feed, which may occur in scenarios such as follow-up phone calls, asynchronous quoting sessions, or consultations conducted from pre-captured images and/or video. In this context, live estimate 902 serves as the primary interactive space for transactional input, with discount cluster fields 904 allowing the service provider user to tailor pricing in real time. These adjustments may be informed by embedded logic derived from historical pricing models, regional quoting norms, or seasonal variation - data sources made available to prompt generator 122 (FIG. 1A) through multimodal signal processor 118 (FIG. 1A). Prompt field 914, in this case displaying the message "48% or less is typical this time of year," represents an automated, contextually-aware suggestion that draws on learned statistical norms from prior estimates to guide negotiation strategy. Such a prompt could be triggered by schema translator-derived data (e.g., object type or service type), temporal metadata (e.g., season or booking lead time), or real-time pricing inputs from external sources, as examples. Expandable fields 906 allow the service provider user to input or verify service components such as packing, valuation, or third-party services, which may in turn influence downstream prompts or pricing recommendations.

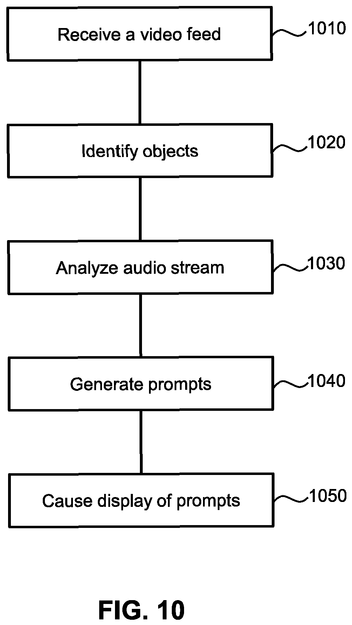

FIG. 10 is a diagram illustrating an exemplary method in accordance with certain aspects of the present disclosure. In one implementation, a method can include, at 1010, receiving, at a schema translator in communication with a service provider device configured to be controlled by a service provider user, a video feed from a client device configured to be controlled by a client user. At 1020, one or more object can be identified and the video feed can be relayed to the service provider device to allow a substantially simultaneous display of the video feed at the service provider device. At 1030, an audio stream can be analyzed, with a multimodal signal processor operatively coupled to the schema translator, in combination with the one or more objects to extract semantic and contextual meaning from speech content of the service provider user and the client user during a consultation. At 1040, contextually relevant prompts are generated with a prompt generator operatively coupled to the multimodal signal processor. The contextually relevant prompts are generated based on at least (i) identification of the one or more objects, (ii) the audio stream, and (iii) the semantic and contextual meaning. The prompt generator is configured to determine whether a particular prompt has been addressed during the consultation, including whether a corresponding question was asked and/or whether a response was received. Operation 1050 comprises causing, with a display module, display of the prompts on the service provider device during the consultation. Note that these operations can be performed during a live videoconference between a client user and a service provider user, or they can be performed on a call that does not include video. Other implementations are also possible.

The disclosed computer operations can be utilized for any number of applications. To provide context for the above, such was often discussed in terms of a relocation task. However, in other implementations, any features of the present disclosure can be utilized for underwriting or claim adjustment, remodeling, painting, furnishing, junk removal, etc. The underlying software architecture can remain substantially the same, with application-specific attributes. For example, in a relocation application, identifying a wall in an image may not be relevant. However, the same identification utilizing the same algorithms described above, in a painting application, can cause attributes of the wall to be assigned in a manner similar to the above (e.g., dimensions, square footage, material, etc.).

Accordingly, some implementations can include generating a quote based on at least the list and the attribute(s), where the quote is for moving the object from a location of the object to a destination location. Such a quote can be generated based on a formula that takes into account the identification of the objects, sizes, weights, etc. in addition to other information such as current location and destination of the move and the date of the move.

In one case, the service provider user could have no items in the list before the time of the consultation. Here, the entire list can be built during the consultation. In another case, the service provider user could have captured a partial list before the consultation. Here, the consultation can resume with the partial list and build the remaining list. This can be achieved by syncing the updates to the list to permanent storage such as a REST API in addition to broadcasting to other members of the consultation via UDP (User Datagram Protocol). In yet another case, the service provider user could have captured a complete or near-complete list before the consultation. Here, the consultation is used only to review the list together, but not capture any new items.

Real-time streaming may be unreliable, so if relying on UDP alone, the service provider device and client device can get into contradicting states, e.g., the service provider believes the consumer's environment-facing camera is active but the consumer's front-facing camera is actually inactive. This can result in the service provider user attempting to share the list with the consumer but the consumer may not receive the UDP message. To address this technical problem, when a user on either side of the call has reconnected after dropping, both sides can be reset to a common initial state. Acknowledgment may also be required before shifting to a new state, so for example if the service provider user flips the client user's camera the service provider user can send an acknowledgment of the successful camera flip so the client device's application state can enable screenshots - this prevents getting out of sync.

The present disclosure contemplates additional algorithms which may be used in other applications, underwriting for example, but other applications as well. Similar to the relocation example, the client user can capture a video or images of the contents of their home, and an inventory list is generated alongside a list of images and bounding boxes identifying each item in the images.

FIG. 11 is a diagram that illustrates an exemplary computing system 1100 in accordance with implementations of the present system. Various portions of systems and methods described herein, may include or be executed on one or more computer systems the same as or similar to computing system 1100. For example, computing engine 102 (including schema translator 116, multimodal signal processor 118, prompt generator 122, and/or display module 124), mobile user device(s) 134, desktop user device(s) 138, external resources 146 and/or other components of the system 100 (FIG. 1A) may be and/or include one more computer systems the same as or similar to computing system 1100. Further, processes, modules, processor components, and/or other components of system 100 described herein may be executed by one or more processing systems similar to and/or the same as that of computing system 1100.

Computing system 1100 may include one or more processors (e.g., processors 1110a-1110n) coupled to system memory 1120, an input/output I/O device interface 1130, and a network interface 1140 via an input/output (I/O) interface 1150. A processor may include a single processor or a plurality of processors (e.g., distributed processors). A processor may be any suitable processor capable of executing or otherwise performing instructions. A processor may include a central processing unit (CPU) that carries out program instructions to perform the arithmetical, logical, and input/output operations of computing system 1100. A processor may execute code (e.g., processor firmware, a protocol stack, a database management system, an operating system, or a combination thereof) that creates an execution environment for program instructions. A processor may include a programmable processor. A processor may include general or special purpose microprocessors. A processor may receive instructions and data from a memory (e.g., system memory 1120). Computing system 1100 may be a uni-processor system including one processor (e.g., processor 1110a), or a multi-processor system including any number of suitable processors (e.g., 1110a-1110n). Multiple processors may be employed to provide for parallel or sequential execution of one or more portions of the techniques described herein. Processes, such as logic flows, described herein may be performed by one or more programmable processors executing one or more computer programs to perform functions by operating on input data and generating corresponding output. Processes described herein may be performed by, and apparatus can also be implemented as, special purpose logic circuitry, e.g., an FPGA (field programmable gate array) or an ASIC (application specific integrated circuit). Computing system 1100 may include a plurality of computing devices (e.g., distributed computer systems) to implement various processing functions.

I/O device interface 1130 may provide an interface for connection of one or more I/O devices 1160 to computer system 1100. I/O devices may include devices that receive input (e.g., from a user) or output information (e.g., to a user). I/O devices 1160 may include, for example, graphical user interface presented on displays (e.g., a cathode ray tube (CRT) or liquid crystal display (LCD) monitor), pointing devices (e.g., a computer mouse or trackball), keyboards, keypads, touchpads, scanning devices, voice recognition devices, gesture recognition devices, printers, audio speakers, microphones, cameras, or the like. I/O devices 1160 may be connected to computer system 1100 through a wired or wireless connection. I/O devices 1160 may be connected to computer system 1100 from a remote location. I/O devices 1160 located on remote computer system, for example, may be connected to computer system 1100 via a network and network interface 1140.

Network interface 1140 may include a network adapter that provides for connection of computer system 1100 to a network. Network interface may 1140 may facilitate data exchange between computer system 1100 and other devices connected to the network. Network interface 1140 may support wired or wireless communication. The network may include an electronic communication network, such as the Internet, a local area network (LAN), a wide area network (WAN), a cellular communications network, or the like.

System memory 1120 may be configured to store program instructions 1170 and/or data 1180. Program instructions 1170 may be executable by a processor (e.g., one or more of processors 1110a-1110n) to implement one or more implementations of the present techniques. Instructions 1170 may include modules and/or components (e.g., schema translator 116, multimodal signal processor 118, prompt generator 122, and/or display module 124 shown in FIG. 1A) of computer program instructions for implementing one or more techniques described herein with regard to various processing modules and/or components. Program instructions may include a computer program (which in certain forms is known as a program, software, software application, script, or code). A computer program may be written in a programming language, including compiled or interpreted languages, or declarative or procedural languages. A computer program may include a unit suitable for use in a computing environment, including as a stand-alone program, a module, a component, or a subroutine. A computer program may or may not correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one or more computer processors located locally at one site or distributed across multiple remote sites and interconnected by a communication network.

System memory 1120 may include a tangible program carrier having program instructions stored thereon. A tangible program carrier may include a non-transitory computer readable storage medium. A non-transitory computer readable storage medium may include a machine readable storage device, a machine readable storage substrate, a memory device, or any combination thereof. Non-transitory computer readable storage medium may include non-volatile memory (e.g., flash memory, ROM, PROM, EPROM, EEPROM memory), volatile memory (e.g., random access memory (RAM), static random access memory (SRAM), synchronous dynamic RAM (SDRAM)), bulk storage memory (e.g., CD-ROM and/or DVD-ROM, hard-drives), or the like. System memory 1120 may include a non-transitory computer readable storage medium that may have program instructions stored thereon that are executable by a computer processor (e.g., one or more of processors 1110a-1110n) to cause the subject matter and the functional operations described herein. A memory (e.g., system memory 1120) may include a single memory device and/or a plurality of memory devices (e.g., distributed memory devices). Instructions or other program code to provide the functionality described herein may be stored on a tangible, non-transitory computer readable media. In some cases, the entire set of instructions may be stored concurrently on the media, or in some cases, different parts of the instructions may be stored on the same media at different times, e.g., a copy may be created by writing program code to a first-in-first-out buffer in a network interface, where some of the instructions are pushed out of the buffer before other portions of the instructions are written to the buffer, with all of the instructions residing in memory on the buffer, just not all at the same time.

I/O interface 1150 may be configured to coordinate I/O traffic between processors 1110a-1110n, system memory 1120, network interface 1140, I/O devices 1160, and/or other peripheral devices. I/O interface 1150 may perform protocol, timing, or other data transformations to convert data signals from one component (e.g., system memory 1120) into a format suitable for use by another component (e.g., processors 1110a-1110n). I/O interface 1150 may include support for devices attached through various types of peripheral buses, such as a variant of the Peripheral Component Interconnect (PCI) bus standard or the Universal Serial Bus (USB) standard.

Implementations of the techniques described herein may be implemented using a single instance of computer system 1100 or multiple computer systems 1100 configured to host different portions or instances of implementations. Multiple computer systems 1100 may provide for parallel or sequential processing/execution of one or more portions of the techniques described herein.

Those skilled in the art will appreciate that computer system 1100 is merely illustrative and is not intended to limit the scope of the techniques described herein. Computer system 1100 may include any combination of devices or software that may perform or otherwise provide for the performance of the techniques described herein. For example, computer system 1100 may include or be a combination of a cloud-computing system, a data center, a server rack, a server, a virtual server, a desktop computer, a laptop computer, a tablet computer, a server device, a client device, a mobile telephone, a personal digital assistant (PDA), a mobile audio or video player, a game console, a vehicle-mounted computer, a television or device connected to a television (e.g., Apple TV ^{™}), or a Global Positioning System (GPS), or the like. Computer system 1100 may also be connected to other devices that are not illustrated, or may operate as a stand-alone system. In addition, the functionality provided by the illustrated components may in some implementations be combined in fewer components or distributed in additional components. Similarly, in some implementations, the functionality of some of the illustrated components may not be provided or other additional functionality may be available.

Those skilled in the art will also appreciate that while various items are illustrated as being stored in memory or on storage while being used, these items or portions of them may be transferred between memory and other storage devices for purposes of memory management and data integrity. Alternatively, in other implementations some or all of the software components may execute in memory on another device and communicate with the illustrated computer system via inter-computer communication. Some or all of the system components or data structures may also be stored (e.g., as instructions or structured data) on a computer-accessible medium or a portable article to be read by an appropriate drive, various examples of which are described above. In some implementations, instructions stored on a computer-accessible medium separate from computer system 1100 may be transmitted to computer system 1100 via transmission media or signals such as electrical, electromagnetic, or digital signals, conveyed via a communication medium such as a network or a wireless link. Various implementations may include receiving, sending, or storing instructions or data implemented in accordance with the foregoing description upon a computer-accessible medium. Accordingly, the present invention may be practiced with other computer system configurations.

In the following, further features, characteristics, and exemplary technical solutions of the present disclosure will be described in terms of items that may be optionally claimed in any combination:
1. A computer program product comprising a non-transitory, machine-readable medium storing instructions which, when executed by at least one programmable processor, cause dynamic interactive operations in real-time during a remote consultation videoconference between a service provider user and a client user, the operations comprising: receiving, at a schema translator in communication with a service provider device configured to be controlled by the service provider user, a video feed from a client device configured to be controlled by the client user; identifying, with the schema translator, during the video feed, one or more objects in the video feed; relaying the video feed to the service provider device to cause a substantially simultaneous display of the video feed at the service provider device; analyzing, with a multimodal signal processor operatively coupled to the schema translator, an audio stream from the videoconference in combination with the one or more objects to extract semantic and contextual meaning from speech content of the service provider user and the client user; generating, with a prompt generator operatively coupled to the multimodal signal processor, contextually relevant prompts based on at least (i) identification of the one or more objects, (ii) the audio stream, and (iii) the semantic and contextual meaning, wherein the prompt generator is further configured to determine whether a particular prompt has been addressed during the videoconference, including whether a corresponding question was asked and/or whether a response was received; and causing, with a display module, display of the prompts on the service provider device during the videoconference.
2. A computer program product comprising a non-transitory, machine-readable medium storing instructions which, when executed by at least one programmable processor, cause dynamic interactive operations in real-time during a remote consultation between a service provider user and a client user, the operations comprising: identifying, with a schema translator, one or more objects in one or more images and/or a video of a location associated with the client user; analyzing, with a multimodal signal processor operatively coupled to the schema translator, an audio stream from the remote consultation in combination with the one or more objects to extract semantic and contextual meaning from speech content of the service provider user and the client user; generating, with a prompt generator operatively coupled to the multimodal signal processor, contextually relevant prompts based on at least (i) identification of the one or more objects, (ii) the audio stream, and (iii) the semantic and contextual meaning, wherein the prompt generator is further configured to determine whether a particular prompt has been addressed during the consultation, including whether a corresponding question was asked and/or whether a response was received; and causing, with a display module, display of the prompts on a service provider device during the consultation.
3. The medium of any other item, wherein the prompt generator is further configured to dynamically prioritize or suppress the prompts based on conversational progress; monitor in real-time whether the prompts have been addressed through natural speech; and automatically dismiss or escalate the prompts based on conversational cues.
4. The medium of any other item, wherein the multimodal signal processor is configured to analyze only a most recent portion of the audio stream from the consultation to extract the semantic and contextual meaning from the speech content of the service provider user and the client user.
5. The medium of any other item, wherein the most recent portion of the audio stream comprises up to a most recent 30, 45, 60, or 90 seconds of the audio stream from the consultation.
6. The medium of any other item, wherein the multimodal signal processor is further configured to obtain historical estimate data, real-time pricing data, and/or contextual metadata associated with the one or more objects, and wherein the prompt generator is further configured to generate the prompts based at least in part on the historical estimate data, the real-time pricing data, and/or the contextual metadata.
7. The medium of any other item, wherein the contextual metadata includes location-based pricing models, prior client user interactions, and/or known logistical constraints.
8. The medium of any other item, wherein the prompts are configured to guide the service provider user toward completing a transaction with the client user.
9. The medium of any other item, wherein the display module is configured to cause unobtrusive display of the prompts on the service provider device during the consultation in a field or window proximate to but separate from a field or window that displays a video feed, and/or as part of a heads-up overlay on the video feed shown to the service provider user.
10. The medium of any other item, wherein the schema translator comprises a machine learning model trained to identify the one or more objects, and attributes of the one or more objects including size, weight, fragility, disassembly requirement, whether an object is a specialized piece of equipment, whether related services associated with an object are required, and packing method; and wherein the prompt generator is further configured to generate the prompts based at least in part on the attributes.
11. The medium of any other item, wherein the multimodal signal processor is configured to transcribe the audio stream using automatic speech recognition techniques, and wherein extracting semantic and contextual meaning from the speech content of the service provider user and the client user comprises identifying entities and context in transcribed content.
12. The medium of any other item, wherein entities comprise tokens in the transcribed content associated with the one or more objects, and/or identifiable items or concepts that have meaning within the one or more images and/or video of the location associated with the client user and/or conversation between the service provider user and the client user.
13. The medium of any other item, wherein the context comprises tokens in the transcribed content associated with at least one of surrounding information, background, or situational factors present in the one or more images and/or video of the location associated with the client user and/or conversation between the service provider user and the client user that influence determining the prompts.
14. The medium of any other item, wherein the prompt generator is further configured to automatically record whether the service provider user follows a given prompt, and to provide post-consultation analytics indicating prompt success rate.
15. The medium of any other item, wherein the display module is configured to cause dynamic modification of a real-time interface display based on synchronization of the one or more objects identified in the one or more images and/or video of the location associated with the client user and recognized speech, thereby improving timing precision and reducing latency in prompted service provider user and client user interaction during the remote consultation.
16. The medium of any other item, wherein the display module is further configured to render contextually-prioritized prompts as a graphical overlay in a predefined region of a live service provider device display of a video feed comprising the one or more images and/or video of the location associated with the client user.
17. The medium of any other item, wherein the schema translator is further configured to facilitate completion of a service estimate and digital agreement during the consultation, without user interaction with a separate interface.
18. The medium of any other item, wherein the multimodal signal processor is configured to extract the semantic and contextual meaning from the speech content of the service provider user and the client user using a trained natural language model.
19. The medium of any other item, wherein the schema translator is configured to process the one or more images and/or video of the location associated with the client user received from the client device and identify, using a trained neural network, the one or more objects and spatial relationships corresponding to items within a physical environment.
20. The medium of any other item, wherein the multimodal signal processor comprises an encoder-decoder transformer configured to transcribe speech; and a large language model with JSON output configured to query the transcribed speech.
21. The medium of any other item, wherein the prompt generator comprises a neural network, a collection of neural networks, a large language model, and/or an encoder-decoder transformer.
22. The medium of any other item, wherein the prompt generator is further configured to facilitate snoozing prompts until later in the consultation such that a snoozed prompt disappears from the display, but retains context on the object or scenario that caused the snoozed prompt such that the service provider user can view and address the snoozed prompt at a later time.
23. The medium of any other item, wherein the consultation comprises a videoconference.
24. A method for facilitating dynamic interactive operations in real-time during a remote consultation between a service provider user and a client user, the method comprising: identifying, with a schema translator, one or more objects in one or more images and/or a video of a location associated with the client user; analyzing, with a multimodal signal processor operatively coupled to the schema translator, an audio stream from the remote consultation in combination with the one or more objects to extract semantic and contextual meaning from speech content of the service provider user and the client user; generating, with a prompt generator operatively coupled to the multimodal signal processor, contextually relevant prompts based on at least (i) identification of the one or more objects, (ii) the audio stream, and (iii) the semantic and contextual meaning, wherein the prompt generator is further configured to determine whether a particular prompt has been addressed during the consultation, including whether a corresponding question was asked and/or whether a response was received; and causing, with a display module, display of the prompts on a service provider device during the consultation.
25. The method of any other item, wherein the prompt generator is further configured to dynamically prioritize or suppress the prompts based on conversational progress; monitor in real-time whether the prompts have been addressed through natural speech; and automatically dismiss or escalate the prompts based on conversational cues.
26. The method of any other item, wherein the multimodal signal processor is configured to analyze only a most recent portion of the audio stream from the consultation to extract the semantic and contextual meaning from the speech content of the service provider user and the client user.
27. The method of any other item, wherein the most recent portion of the audio stream comprises up to a most recent 30, 45, 60, or 90 seconds of the audio stream from the consultation.
28. The method of any other item, wherein the multimodal signal processor is further configured to obtain historical estimate data, real-time pricing data, and/or contextual metadata associated with the one or more objects, and wherein the prompt generator is further configured to generate the prompts based at least in part on the historical estimate data, the real-time pricing data, and/or the contextual metadata.
29. The method of any other item, wherein the contextual metadata includes location-based pricing models, prior client user interactions, and/or known logistical constraints.
30. The method of any other item, wherein the prompts are configured to guide the service provider user toward completing a transaction with the client user.
31. The method of any other item, wherein the display module is configured to cause unobtrusive display of the prompts on the service provider device during the consultation in a field or window proximate to but separate from a field or window that displays a video feed, and/or as part of a heads-up overlay on the video feed shown to the service provider user.
32. The method of any other item, wherein the schema translator comprises a machine learning model trained to identify the one or more objects, and attributes of the one or more objects including size, weight, fragility, disassembly requirement, whether an object is a specialized piece of equipment, whether related services associated with an object are required, and packing method; and wherein the prompt generator is further configured to generate the prompts based at least in part on the attributes.
33. The method of any other item, wherein the multimodal signal processor is configured to transcribe the audio stream using automatic speech recognition techniques, and wherein extracting semantic and contextual meaning from the speech content of the service provider user and the client user comprises identifying entities and context in transcribed content.
34. The method of any other item, wherein entities comprise tokens in the transcribed content associated with the one or more objects, and/or identifiable items or concepts that have meaning within the one or more images and/or video of the location associated with the client user and/or conversation between the service provider user and the client user.
35. The method of any other item, wherein the context comprises tokens in the transcribed content associated with at least one of surrounding information, background, or situational factors present in the one or more images and/or video of the location associated with the client user and/or conversation between the service provider user and the client user that influence determining the prompts.
36. The method of any other item, wherein the prompt generator is further configured to automatically record whether the service provider user follows a given prompt, and to provide post-consultation analytics indicating prompt success rate.
37. The method of any other item, wherein the display module is configured to cause dynamic modification of a real-time interface display based on synchronization of the one or more objects identified in the one or more images and/or video of the location associated with the client user and recognized speech, thereby improving timing precision and reducing latency in prompted service provider user and client user interaction during the remote consultation.
38. The method of any other item, wherein the display module is further configured to render contextually-prioritized prompts as a graphical overlay in a predefined region of a live service provider device display of a video feed comprising the one or more images and/or video of the location associated with the client user.
39. The method of claim 24, wherein the schema translator is further configured to facilitate completion of a service estimate and digital agreement during the consultation, without user interaction with a separate interface.
40. The method of any other item, wherein the multimodal signal processor is configured to extract the semantic and contextual meaning from the speech content of the service provider user and the client user using a trained natural language model.
41. The method of any other item, wherein the schema translator is configured to process the one or more images and/or video of the location associated with the client user received from the client device and identify, using a trained neural network, the one or more objects and spatial relationships corresponding to items within a physical environment.
42. The method of any other item, wherein the multimodal signal processor comprises an encoder-decoder transformer configured to transcribe speech; and a large language model with JSON output configured to query the transcribed speech.
43. The method of any other item, wherein the prompt generator comprises a neural network, a collection of neural networks, a large language model, and/or an encoder-decoder transformer.
44. The method of any other item, wherein the prompt generator is further configured to facilitate snoozing prompts until later in the consultation such that a snoozed prompt disappears from the display, but retains context on the object or scenario that caused the snoozed prompt such that the service provider user can view and address the snoozed prompt at a later time.
45. The method of any other item, wherein the consultation comprises a videoconference.
46. A system comprising: at least one programmable processor; and a non-transitory machine-readable medium storing instructions which, when executed by the at least one programmable processor, cause the at least one programmable processor to perform operations comprising those of any of Items 1-45.

The present disclosure contemplates that the calculations disclosed in the implementations herein may be performed in a number of ways, applying the same concepts taught herein, and that such calculations are equivalent to the implementations disclosed.

One or more aspects or features of the subject matter described herein can be realized in digital electronic circuitry, integrated circuitry, specially designed application specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship between client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural language, an object-oriented programming language, a functional programming language, a logical programming language, and/or in assembly/machine language. As used herein, the term "machine-readable medium" (or "computer readable medium") refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" (or "computer readable signal") refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer (e.g., as described related to FIG. 11 and/or other figures). Other kinds of devices can be used to provide for interaction with a user as well. For example, feedback provided to the user can be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multipoint resistive or capacitive trackpads, voice recognition hardware and software, optical scanners, optical pointers, digital image capture devices and associated interpretation software, and the like.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

The subject matter described herein can be embodied in systems, apparatus, methods, computer programs and/or articles depending on the desired configuration. Any methods or the logic flows depicted in the accompanying figures and/or described herein do not necessarily require the particular order shown, or sequential order, to achieve desirable results. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. The implementations described above can be directed to various combinations and sub combinations of the disclosed features and/or combinations and sub combinations of further features noted above. Furthermore, above described advantages are not intended to limit the application of any issued claims to processes and structures accomplishing any or all of the advantages.

Additionally, section headings shall not limit or characterize the invention(s) set out in any claims that may issue from this disclosure. Further, the description of a technology in the "Description of the Related Art" is not to be construed as an admission that technology is prior art to any invention(s) in this disclosure. Neither is the "Summary" to be considered as a characterization of the invention(s) set forth in issued claims. Furthermore, any reference to this disclosure in general or use of the word "invention" in the singular is not intended to imply any limitation on the scope of the claims set forth below. Multiple inventions may be set forth according to the limitations of the multiple claims issuing from this disclosure, and such claims accordingly define the invention(s), and their equivalents, that are protected thereby.

## Claims

1. A method for facilitating dynamic interactive operations in real-time during a remote consultation between a service provider user and a client user, the method comprising:
identifying, with a schema translator, one or more objects in one or more images and/or a video of a location associated with the client user;
analyzing, with a multimodal signal processor operatively coupled to the schema translator, an audio stream from the remote consultation in combination with the one or more objects to extract semantic and contextual meaning from speech content of the service provider user and the client user;
generating, with a prompt generator operatively coupled to the multimodal signal processor, contextually relevant prompts based on at least (i) identification of the one or more objects, (ii) the audio stream, and (iii) the semantic and contextual meaning, wherein the prompt generator is further configured to determine whether a particular prompt has been addressed during the consultation, including whether a corresponding question was asked and/or whether a response was received; and
causing, with a display module, display of the prompts on a service provider device during the consultation.

2. The method of claim 1, wherein the prompt generator is further configured to dynamically prioritize or suppress the prompts based on conversational progress; monitor in real-time whether the prompts have been addressed through natural speech; and automatically dismiss or escalate the prompts based on conversational cues.

3. The method of claim 1 or 2, wherein the multimodal signal processor is configured to analyze only a most recent portion of the audio stream from the consultation to extract the semantic and contextual meaning from the speech content of the service provider user and the client user, wherein, optionally, the most recent portion of the audio stream comprises up to a most recent 30, 45, 60, or 90 seconds of the audio stream from the consultation.

4. The method of any one of claims 1 to 3, wherein the multimodal signal processor is further configured to obtain historical estimate data, real-time pricing data, and/or contextual metadata associated with the one or more objects, and wherein the prompt generator is further configured to generate the prompts based at least in part on the historical estimate data, the real-time pricing data, and/or the contextual metadata.

5. The method of any one of claims 1 to 4, wherein the prompts are configured to guide the service provider user toward completing a transaction with the client user.

6. The method of any one of claims 1 to 5, wherein the schema translator comprises a machine learning model trained to identify the one or more objects, and attributes of the one or more objects including size, weight, fragility, disassembly requirement, whether an object is a specialized piece of equipment, whether related services associated with an object are required, and packing method; and wherein the prompt generator is further configured to generate the prompts based at least in part on the attributes.

7. The method of any one of claims 1 to 6, wherein the multimodal signal processor is configured to transcribe the audio stream using automatic speech recognition techniques, and wherein extracting semantic and contextual meaning from the speech content of the service provider user and the client user comprises identifying entities and context in transcribed content.

8. The method of claim 7, wherein entities comprise tokens in the transcribed content associated with the one or more objects, and/or identifiable items or concepts that have meaning within the one or more images and/or video of the location associated with the client user and/or conversation between the service provider user and the client user, and/or wherein the context comprises tokens in the transcribed content associated with at least one of surrounding information, background, or situational factors present in the one or more images and/or video of the location associated with the client user and/or conversation between the service provider user and the client user that influence determining the prompts.

9. The method of any one of claims 1 to 8, wherein the prompt generator is further configured to automatically record whether the service provider user follows a given prompt, and to provide post-consultation analytics indicating prompt success rate.

10. The method of any one of claims 1 to 9, wherein the display module is configured to cause dynamic modification of a real-time interface display based on synchronization of the one or more objects identified in the one or more images and/or video of the location associated with the client user and recognized speech, thereby improving timing precision and reducing latency in prompted srvice provider user and client user interaction during the remote consultation, or, wherein the display module is further configured to render contextually-prioritized prompts as a graphical overlay in a predefined region of a live service provider device display of a video feed comprising the one or more images and/or video of the location associated with the client user.

11. The method of any one of claims 1 to 10, wherein the schema translator is further configured to facilitate completion of a service estimate and digital agreement during the consultation, without user interaction with a separate interface.

12. The method of any one of claims 1 to 11, wherein the multimodal signal processor is configured to extract the semantic and contextual meaning from the speech content of the service provider user and the client user using a trained natural language model.

13. The method of any one of claims 1 to 12, wherein the schema translator is configured to process the one or more images and/or video of the location associated with the client user received from the client device and identify, using a trained neural network, the one or more objects and spatial relationships corresponding to items within a physical environment.

14. A computer program product comprising a non-transitory, machine-readable medium storing instructions which, when executed by at least one programmable processor, cause dynamic interactive operations in real-time during a remote consultation between a service provider user and a client user according to the method as defined in any one of claims 1 to 13.

15. A computer program product comprising a non-transitory, machine-readable medium storing instructions which, when executed by at least one programmable processor, cause dynamic interactive operations in real-time during a remote consultation videoconference between a service provider user and a client user, the operations comprising:
receiving, at a schema translator in communication with a service provider device configured to be controlled by the service provider user, a video feed from a client device configured to be controlled by the client user;
identifying, with the schema translator, during the video feed, one or more objects in the video feed;
relaying the video feed to the service provider device to cause a substantially simultaneous display of the video feed at the service provider device;
analyzing, with a multimodal signal processor operatively coupled to the schema translator, an audio stream from the videoconference in combination with the one or more objects to extract semantic and contextual meaning from speech content of the service provider user and the client user;
generating, with a prompt generator operatively coupled to the multimodal signal processor, contextually relevant prompts based on at least (i) identification of the one or more objects, (ii) the audio stream, and (iii) the semantic and contextual meaning, wherein the prompt generator is further configured to determine whether a particular prompt has been addressed during the videoconference, including whether a corresponding question was asked and/or whether a response was received; and
causing, with a display module, display of the prompts on the service provider device during the videoconference.
